# EUROPEAN PATENT APPLICATION

(11) **EP 4 240 086 A1**
(43) Date of publication of application: **06.09.2023**
(21) Application number: 21899998.5
(22) Date of filing: 30.11.2021
(51) Int. Cl.: H04W 72/04, H04W 72/00

(54) **COMMUNICATION METHOD AND DEVICE**

(30) Priority: 02.12.2020 CN 202011398842; 30.12.2020 CN 202011614776
(71) Applicant: Huawei Technologies Co., Ltd., Shenzhen, Guangdong 518129 (CN)
(72) Inventor: WANG, Bichai, Shenzhen, Guangdong 518129 (CN); LI, Xueru, Shenzhen, Guangdong 518129 (CN)
(74) Representative: Maiwald GmbH
(86) International application number: PCT/CN2021/134418
(87) International publication number: WO 2022/116967

(57) **Abstract**

This disclosure relates to a communication method and apparatus. Capability information is sent to a network device, where the capability information indicates antenna ports supported by P frequency domain units of a terminal device, and an antenna port supported by an i^{th} frequency domain unit in the P frequency domain units includes an antenna port associated with the i^{th} frequency domain unit and an antenna port that is in antenna ports associated with *Nᵢ* frequency domain units in the P frequency domain units and that can be switched to the i^{th} frequency domain unit. In embodiments of this disclosure, a single frequency domain unit can support more antenna ports, thereby improving uplink transmission performance.

## Description

### CROSS-REFERENCE TO RELATED APPLICATION

This disclosure claims priority to Chinese Patent Application No. 202011398842.9, filed with the China National Intellectual Property Administration on December 2, 2020 and entitled "METHOD FOR IMPROVING UPLINK CAPACITY", which is incorporated herein by reference in its entirety. This disclosure claims priority to Chinese Patent Application No. 202011614776.4, filed with the China National Intellectual Property Administration on December 30, 2020 and entitled "COMMUNICATION METHOD AND APPARATUS", which is incorporated herein by reference in its entirety.

### TECHNICAL FIELD

This disclosure relates to the field of communications technologies, and in particular, to a communication method and apparatus.

### BACKGROUND

With the diversified development of services such as the mobile Internet and the Internet of Things, mobile communication has an increasingly high requirement on uploading of massive data. For example, services such as ultra-high definition videos, intelligent surveillance, and virtual reality (virtual reality, VR) video live broadcast pose a relatively high requirement on an uplink (uplink, UL) capacity. Currently, commercial bands lower than 6G (Sub-6G) of a mainstream 5th generation (5th generation, 5G) mobile communication system are mainly medium- and high-bands such as 2.6 GHz, 3.5 GHz, and 4.9 GHz, and a time division duplex (time division duplex, TDD) mode is usually used. Consequently, problems such as a relatively large path loss and a relatively low uplink duty cycle exist, causing an insufficient uplink capacity.

An existing uplink enhancement solution mainly includes implementing coordinated transmission of a plurality of frequencies by using technologies such as carrier aggregation (carrier aggregation, CA) and supplementary uplink (supplementary uplink, SUL), which can improve spectrum resource utilization or uplink coverage to some extent. However, to meet a requirement of diversified service development, the uplink capacity further needs to be improved.

### SUMMARY

Embodiments of this disclosure provide a communication method and apparatus, to improve uplink performance.

According to a first aspect, a communication method is provided. The method may be performed by a terminal device or performed by a chip system, and the chip system can implement a function of the terminal device. The method includes: sending a first message to a network device, where the first message includes capability information, the capability information indicates antenna ports supported by P frequency domain units of the terminal device, an antenna port supported by an i^{th} frequency domain unit in the P frequency domain units includes an antenna port associated with the i^{th} frequency domain unit and an antenna port that is in antenna ports associated with *Nᵢ* frequency domain units in the P frequency domain units and that can be switched to the i^{th} frequency domain unit, the *Nᵢ* frequency domain units do not include the i^{th} frequency domain unit, and at least two of the P frequency domain units are associated with respective uplink transmission configuration information, where P is an integer greater than 1, and *Nᵢ* is an integer greater than or equal to 1 and less than P; and receiving configuration information from the network device, where the configuration information is used to configure one or more SRS resources for a first frequency domain unit of the terminal device, and is used to configure an association relationship between an SRS port of the one or more SRS resources and an antenna port supported by the first frequency domain unit, and a number of SRS ports of an SRS resource of the first frequency domain unit is a positive integer less than or equal to a number of antenna ports supported by the first frequency domain unit.

In this embodiment of this disclosure, the antenna port supported by the i^{th} frequency domain unit may include the antenna port associated with the i^{th} frequency domain unit, and may further include an antenna port that can be switched to the i^{th} frequency domain unit. In other words, the antenna port can be switched to more frequency domain units, to send information on more frequency domain units. According to the solution provided in this embodiment of this disclosure, a single frequency domain unit can support more antenna ports, and flexibility is relatively high, thereby improving uplink transmission performance.

With reference to the first aspect, in a first optional implementation of the first aspect, that the capability information indicates antenna ports supported by P frequency domain units of the terminal device includes: The capability information indicates an index *xᵢ* of the antenna port supported by the i^{th} frequency domain unit in the P frequency domain units, where *xᵢ* is an integer greater than or equal to 1 and less than or equal to *Nₜ*, or *xᵢ* is a nonnegative integer less than *Nₜ*, and *Nₜ* is a total number of different antenna ports associated with the P frequency domain units; or the capability information indicates a total number *Nₜ* of antenna ports of the terminal device, and the P frequency domain units are associated with the *Nₜ* antenna ports. The capability information may indicate indexes of the antenna ports supported by the P frequency domain units, so that the indication of the capability information is more explicit in this manner, which helps the network device learns of a capability of UE more clearly. Alternatively, the capability information may indicate the total number of antenna ports, and there is no need to distinguish between antenna ports respectively supported by the frequency domain units. This manner helps reduce signaling overheads.

With reference to the first aspect, in a second optional implementation of the first aspect, that the capability information indicates antenna ports supported by P frequency domain units of the terminal device includes: The capability information indicates a number *Mᵢ* of antenna ports associated with the i^{th} frequency domain unit in the P frequency domain units, and the first message further includes first information, where the first information indicates information about an antenna port that is in the *Mᵢ* antenna ports and that can be switched to a j^{th} frequency domain unit, i is unequal to j, and i and j are integers greater than or equal to 1 and less than or equal to P. This manner is equivalent to using existing information and adding new information based on the existing information, to indicate the antenna ports supported by the P frequency domain units. For example, if a number of antenna ports associated with the P frequency domain units is existing information, the first information may be further added to the first message, and the antenna ports supported by the P frequency domain units can be indicated by using the existing information and the first information. The existing information indicates a feature in this embodiment of this disclosure, thereby improving utilization of the existing information.

With reference to the second optional implementation of the first aspect, in a third optional implementation of the first aspect, that the first information indicates information about an antenna port that is in the *Mᵢ* antenna ports and that can be switched to a j^{th} frequency domain unit includes: The first information indicates a number of antenna ports that are in the *Mᵢ* antenna ports and that can be switched to the j^{th} frequency domain unit; or the first information indicates that an m^{th} antenna port in the *Mᵢ* antenna ports can be switched to the j^{th} frequency domain unit, where m=1, 2, ..., and *Mᵢ*, or m=0, 1, ..., and *Mᵢ*-1. The first information may also perform indication in different manners, and may indicate the number of antenna ports that are in the *Mᵢ* antenna ports and that can be switched to the j^{th} frequency domain unit. This manner is relatively simple, and helps reduce signaling overheads. Alternatively, the first information may indicate a specific antenna port that can be switched to the j^{th} frequency domain unit, so that the indication is more explicit.

With reference to the first aspect or any one of the first optional implementation of the first aspect to the third optional implementation of the first aspect, in a fourth optional implementation of the first aspect, the method further includes: receiving configuration information from the network device, where the configuration information is used to configure one or more SRS resources for a first frequency domain unit of the terminal device.

With reference to the fourth optional implementation of the first aspect, in a fifth optional implementation of the first aspect, the configuration information is further used to configure an association relationship between an SRS port of the one or more SRS resources and an antenna port supported by the first frequency domain unit, the association relationship between the SRS port of the one or more SRS resources and the antenna port supported by the first frequency domain unit indicates an antenna port used by the terminal device to send an SRS corresponding to the SRS port, and a number of SRS ports of an SRS resource of the first frequency domain unit is a positive integer less than or equal to a number of antenna ports supported by the first frequency domain unit.

With reference to the fourth optional implementation of the first aspect or the fifth optional implementation of the first aspect, in a sixth optional implementation of the first aspect, the configuration information is further used to configure a second SRS resource for a second frequency domain unit of the terminal device, and if the second SRS resource and a first SRS resource occupy a same time unit, the second SRS resource and the first SRS resource are not associated with a same antenna port, where the first SRS resource is one of the one or more SRS resources. This can be understood as that one antenna port is used to send information on only one carrier at one moment, to facilitate scheduling by the network device and avoid confusion.

According to a second aspect, another communication method is provided. The method may be performed by a network device or performed by a chip system, and the chip system can implement a function of the network device. For example, the network device is an access network device like a base station. The method includes: receiving a first message from a terminal device, where the first message includes capability information, the capability information indicates antenna ports supported by P frequency domain units of the terminal device, an antenna port supported by an i^{th} frequency domain unit in the P frequency domain units includes an antenna port associated with the i^{th} frequency domain unit and an antenna port that is in antenna ports associated with *Nᵢ* frequency domain units in the P frequency domain units and that can be switched to the i^{th} frequency domain unit, the *Nᵢ* frequency domain units do not include the i^{th} frequency domain unit, and at least two of the P frequency domain units are associated with respective uplink transmission configuration information, where P is an integer greater than 1, and *Nᵢ* is an integer greater than or equal to 1 and less than P; and sending configuration information to the terminal device, where the configuration information is used to configure one or more SRS resources for a first frequency domain unit of the terminal device, and is used to configure an association relationship between an SRS port of the one or more SRS resources and an antenna port supported by the first frequency domain unit, and a number of SRS ports of an SRS resource of the first frequency domain unit is a positive integer less than or equal to a number of antenna ports supported by the first frequency domain unit.

With reference to the second aspect, in a first optional implementation of the second aspect, that the capability information indicates antenna ports supported by P frequency domain units of the terminal device includes: The capability information indicates an index *xᵢ* of the antenna port supported by the i^{th} frequency domain unit in the P frequency domain units, where *xᵢ* is an integer greater than or equal to 1 and less than or equal to *Nₜ*, or *xᵢ* is a nonnegative integer less than *Nₜ*, and *Nₜ* is a total number of different antenna ports associated with the P frequency domain units; or the capability information indicates a total number *Nₜ* of antenna ports of the terminal device, and all of the P frequency domain units are associated with the *Nₜ* antenna ports.

With reference to the second aspect, in a second optional implementation of the second aspect, that the capability information indicates antenna ports supported by P frequency domain units of the terminal device includes: The capability information indicates a number *Mᵢ* of antenna ports associated with the i^{th} frequency domain unit in the P frequency domain units, and the first message further includes first information, where the first information indicates information about an antenna port that is in the *Mᵢ* antenna ports and that can be switched to a j^{th} frequency domain unit, i is unequal to j, and i and j are integers greater than or equal to 1 and less than or equal to P.

With reference to the second optional implementation of the second aspect, in a third optional implementation of the second aspect, that the first information indicates information about an antenna port that is in the *Mᵢ* antenna ports and that can be switched to a j^{th} frequency domain unit includes: The first information indicates a number of antenna ports that are in the *Mᵢ* antenna ports and that can be switched to the j^{th} frequency domain unit; or the first information indicates that an m^{th} antenna port in the *Mᵢ* antenna ports can be switched to the j^{th} frequency domain unit, where m=1, 2, ..., and *Mᵢ*, or m=0, 1, ..., and *Mᵢ*-1.

With reference to the second aspect or any one of the first optional implementation of the second aspect to the third optional implementation of the second aspect, in a fourth optional implementation of the second aspect, the method further includes: sending configuration information to the terminal device, where the configuration information is used to configure one or more SRS resources for a first frequency domain unit of the terminal device.

With reference to the fourth optional implementation of the second aspect, in a fifth optional implementation of the second aspect, the configuration information is further used to configure an association relationship between an SRS port of the one or more SRS resources and an antenna port supported by the first frequency domain unit, the association relationship between the SRS port of the one or more SRS resources and the antenna port supported by the first frequency domain unit indicates an antenna port used by the terminal device to send an SRS corresponding to the SRS port, and a number of SRS ports of an SRS resource of the first frequency domain unit is a positive integer less than or equal to a number of antenna ports supported by the first frequency domain unit.

With reference to the fourth optional implementation of the second aspect or the fifth optional implementation of the second aspect, in a sixth optional implementation of the second aspect, the configuration information is further used to configure a second SRS resource for a second frequency domain unit of the terminal device, and if the second SRS resource and a first SRS resource occupy a same time unit, the second SRS resource and the first SRS resource are not associated with a same antenna port, where the first SRS resource is one of the one or more SRS resources.

With reference to the second aspect or any one of the first optional implementation of the second aspect to the sixth optional implementation of the second aspect, in a seventh optional implementation of the second aspect, the method further includes: when a first condition is met, sending new configuration information to the terminal device, where the new configuration information is used to configure at least one SRS resource for the first frequency domain unit, and is used to configure an association relationship between an SRS port of the at least one SRS resource and the antenna port supported by the first frequency domain unit. The network device may send the configuration information to UE only once, and does not change the configuration information after sending the configuration information. For example, the network device sends the configuration information to the UE after the UE succeeds in random access, and does not change the configuration information after sending the configuration information. Alternatively, the network device may update the configuration information. For example, when the first condition is met, the network device may send new configuration information to the UE. The new configuration information is still used to configure an SRS resource for a carrier of the UE, and the configuration information may be further used to configure an association relationship between an SRS port of the SRS resource and an antenna port of the UE. In this way, configurations of the antenna port and the SRS resource can better comply with a current network status, to achieve better uplink transmission performance.

With reference to the seventh optional implementation of the second aspect, in an eighth optional implementation of the second aspect, the first condition includes one or more of the following: uplink channel quality of the terminal device is lower than a first threshold; using a time point at which the configuration information is sent as a start time point, duration from the start time point to a current time point reaches first duration; the terminal device is handed over to a new cell; a value of a first parameter of the terminal device changes; or trigger information is received from the terminal device, where the trigger information indicates to reconfigure an SRS resource. In the several cases, a channel condition may change. Therefore, the configuration information can be updated in the several cases to achieve better uplink transmission performance. Certainly, the first condition is not limited thereto.

For technical effects brought by the second aspect or the optional implementations of the second aspect, refer to the descriptions of the technical effects brought by the first aspect or the corresponding implementations.

According to a third aspect, a communication apparatus is provided. The communication apparatus is, for example, a terminal device, or may be a component like a chip disposed in the terminal device. The communication apparatus may include at least one antenna port and at least one radio frequency link. A first radio frequency link in the at least one radio frequency link includes M crystal oscillators, a first amplifier, a first switch configured to connect the first amplifier to the M crystal oscillators, and M filters connected to the first amplifier. The first switch can be switched between the M crystal oscillators. The M filters are further connected to a first antenna port, and the first antenna port is one of the at least one antenna port. The M crystal oscillators are associated with M frequency domain units, and M is an integer greater than or equal to 2. In this embodiment of this disclosure, the first amplifier may be connected to the M crystal oscillators by using the first switch, and the first antenna port can send information on more frequency domain units through switching of the first switch. In other words, the antenna port can be switched to more frequency domain units, to send information on more frequency domain units. According to the solution provided in this embodiment of this disclosure, a single frequency domain unit can support more antenna ports, and flexibility is relatively high, thereby improving uplink transmission performance.

With reference to the third aspect, in a first optional implementation of the third aspect, the at least one radio frequency link further includes a second radio frequency link, and the second radio frequency link includes N crystal oscillators, a second amplifier, a second switch configured to connect the second amplifier to the N crystal oscillators, and N filters connected to the second amplifier. The second switch can be switched between the N crystal oscillators. The N filters are further connected to a second antenna port, and the second antenna port is one of the at least one antenna port. The N crystal oscillators are associated with N frequency domain units, and N is an integer greater than or equal to 2. For example, there may be an intersection of the N frequency domain units and the M frequency domain units. In this case, for a frequency domain unit included in the intersection, information on the frequency domain unit may be sent by using the first antenna port, or may be sent by using the second antenna port. Therefore, a sending gain and sending reliability of the information are improved.

According to a fourth aspect, another communication apparatus is provided. The communication apparatus may be the terminal device according to any one of the first aspect and the second aspect. The communication apparatus has a function of the terminal device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. The transceiver unit may be referred to as a sending unit when implementing the sending function, and the transceiver unit may be referred to as a receiving unit when implementing the receiving function. The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

Optionally, the communication apparatus and the communication apparatus in the third aspect may be different communication apparatuses, or may be a same communication apparatus. If the communication apparatus and the communication apparatus in the third aspect are a same communication apparatus, the transceiver unit included in the communication apparatus may include the at least one antenna port and the at least one radio frequency link in the third aspect, or include the at least one radio frequency link in the third aspect; or the transceiver unit included in the communication apparatus may be implemented by using the at least one antenna port and the at least one radio frequency link in the third aspect, or the transceiver unit included in the communication apparatus may be implemented by using the at least one radio frequency link in the third aspect.

For example, the processing unit is configured to determine capability information of the terminal device, where the capability information indicates antenna ports supported by P frequency domain units of the terminal device, an antenna port supported by an i^{th} frequency domain unit in the P frequency domain units includes an antenna port associated with the i^{th} frequency domain unit and an antenna port that is in antenna ports associated with *Nᵢ* frequency domain units in the P frequency domain units and that can be switched to the i^{th} frequency domain unit, the *Nᵢ*frequency domain units do not include the i^{th} frequency domain unit, and at least two of the P frequency domain units are associated with respective uplink transmission configuration information, where P is an integer greater than 1, and *Nᵢ* is an integer greater than or equal to 1 and less than P.

The sending unit (or the transceiver unit) is configured to send a first message to a network device, where the first message includes the capability information.

Alternatively, the processing unit is configured to determine capability information of the terminal device, where the capability information indicates antenna ports supported by P frequency domain units of the terminal device, an antenna port supported by an i^{th} frequency domain unit in the P frequency domain units includes an antenna port associated with the i^{th} frequency domain unit and an antenna port that is in antenna ports associated with *Nᵢ* frequency domain units in the P frequency domain units and that can be switched to the i^{th} frequency domain unit, the *Nᵢ*frequency domain units do not include the i^{th} frequency domain unit, and at least two of the P frequency domain units are associated with respective uplink transmission configuration information, where P is an integer greater than 1, and *Nᵢ* is an integer greater than or equal to 1 and less than P.

The processing unit is configured to send a first message to a network device by using the sending unit (or the transceiver unit), where the first message includes the capability information.

In still another optional implementation, the communication apparatus includes a storage unit and a processing unit. The processing unit is configured to: be coupled to the storage unit, and execute a program or instructions in the storage unit, to enable the communication apparatus to perform the function of the terminal device.

According to a fifth aspect, still another communication apparatus is provided. The communication apparatus may be the network device according to any one of the first aspect and the second aspect. The communication apparatus has a function of the network device. The network device is, for example, a base station, or a baseband apparatus in the base station. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the description in the fourth aspect.

For example, the transceiver unit is configured to receive a first message from a terminal device, where the first message includes capability information, the capability information indicates antenna ports supported by P frequency domain units of the terminal device, an antenna port supported by an i^{th} frequency domain unit in the P frequency domain units includes an antenna port associated with the i^{th} frequency domain unit and an antenna port that is in antenna ports associated with *Nᵢ* frequency domain units in the P frequency domain units and that can be switched to the i^{th} frequency domain unit, the *Nᵢ* frequency domain units do not include the i^{th} frequency domain unit, and at least two of the P frequency domain units are associated with respective uplink transmission configuration information, where P is an integer greater than 1, and *Nᵢ* is an integer greater than or equal to 1 and less than P.

Alternatively, the processing unit is configured to receive a first message from a terminal device by using the transceiver unit, where the first message includes capability information, the capability information indicates antenna ports supported by P frequency domain units of the terminal device, an antenna port supported by an i^{th} frequency domain unit in the P frequency domain units includes an antenna port associated with the i^{th} frequency domain unit and an antenna port that is in antenna ports associated with *Nᵢ* frequency domain units in the P frequency domain units and that can be switched to the i^{th} frequency domain unit, the *Nᵢ* frequency domain units do not include the i^{th} frequency domain unit, and at least two of the P frequency domain units are associated with respective uplink transmission configuration information, where P is an integer greater than 1, and *Nᵢ* is an integer greater than or equal to 1 and less than P.

In still another optional implementation, the communication apparatus includes a storage unit and a processing unit. The processing unit is configured to: be coupled to the storage unit, and execute a program or instructions in the storage unit, to enable the communication apparatus to perform the function of the network device.

According to a sixth aspect, a computer-readable storage medium is provided. The computer-readable storage medium is configured to store a computer program or instructions. When the computer program or the instructions are run, the methods performed by the terminal device or the network device in the foregoing aspects are implemented.

According to a seventh aspect, a computer program product including instructions is provided. When the computer program product is run on a computer, the methods in the foregoing aspects are implemented.

### BRIEF DESCRIPTION OF DRAWINGS

FIG. 1 is a schematic diagram of a structure of UE according to an embodiment of this disclosure;
FIG. 2 is a schematic diagram of an application scenario of an embodiment of this disclosure;
FIG. 3 is a flowchart of a communication method according to an embodiment of this disclosure;
FIG. 4 is a schematic diagram of another structure of UE according to an embodiment of this disclosure;
FIG. 5 is a schematic diagram of content indicated by configuration information according to an embodiment of this disclosure;
FIG. 6 is a schematic diagram of a simulation result of a solution according to an embodiment of this disclosure;
FIG. 7 is a schematic block diagram of a communication apparatus according to an embodiment of this disclosure;
FIG. 8 is a schematic block diagram of a terminal device according to an embodiment of this disclosure; and
FIG. 9 is a schematic block diagram of a network device according to an embodiment of this disclosure.

### DESCRIPTION OF EMBODIMENTS

To make objectives, technical solutions, and advantages of embodiments of this disclosure clearer, the following further describes embodiments of this disclosure in detail with reference to the accompanying drawings.

In the following, some terms in embodiments of this disclosure are explained and described to facilitate understanding by a person skilled in the art.

In embodiments of this disclosure, a terminal device is a device having a wireless receiving/sending function, and may be a fixed device, a mobile device, a handheld device (for example, a mobile phone), a wearable device, an in-vehicle device, or a wireless apparatus (for example, a communication module, a modem, or a chip system) built in the foregoing device. The terminal device is configured to connect to people, things, machines, and the like, and may be widely used in various scenarios, for example, the terminal device includes but is limited to terminal devices in the following scenarios: cellular communication, device-to-device (device-to-device, D2D) communication, vehicle-to-everything (vehicle-to-everything, V2X), machine-to-machine/machine-type communication (machine-to-machine /machine-type communication, M2M/MTC), Internet of Things (Internet of Things, IoT), virtual reality (virtual reality, VR), augmented reality (augmented reality, AR), industrial control (industrial control), self driving (self driving), remote medical (remote medical), a smart grid (smart grid), smart furniture, smart office, smart wear, smart transportation, a smart city (smart city), an uncrewed aerial vehicle, a robot, and the like. The terminal device sometimes may be referred to as user equipment (user equipment, UE), a terminal, an access station, a UE station, a remote station, a wireless communication device, a user apparatus, or the like. For the convenience of description, in embodiments of this disclosure, the terminal device is described by using UE as an example.

A network device in embodiments of this disclosure includes, for example, an access network device and/or a core network device. The access network device is a device having a wireless receiving/sending function, and is configured to communicate with the terminal device. The access network device includes but is not limited to a base station (BTS, Node-B, eNodeB/eNB, or gNodeB/gNB) in the foregoing communication system, a transmission/reception point (transmission/reception point, TRP), a subsequently evolved base station in the 3rd generation partnership project (3rd generation partnership project, 3GPP), and an access node, a wireless relay node, a wireless backhaul node, or the like in a wireless fidelity (wireless fidelity, Wi-Fi) system. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission/reception points. The network device may be a radio controller, a centralized unit (centralized unit, CU), and/or a distributed unit (distributed unit, DU) in a cloud radio access network (cloud radio access network, CRAN) scenario. The network device may be a server, a wearable device, an in-vehicle device, or the like. For example, a network device in the vehicle-to-everything (vehicle-to-everything, V2X) technology may be a road side unit (road side unit, RSU). An example in which the access network device is a base station is used below for description. A plurality of network devices in the communication system may be base stations of a same type or may be base stations of different types. The base station may communicate with the terminal device, or may communicate with the terminal device by using a relay station. The terminal device may communicate with a plurality of base stations of different access technologies. The core network device is configured to implement functions such as mobility management, data processing, session management, and policy and charging. Devices implementing a core network function in systems of different access technologies may have different names. This is not limited in this disclosure. Using a 5G system as an example, the core network device includes an access and mobility management function (access and mobility management function, AMF), a session management function (session management function, SMF), a user plane function (user plane function, UPF), or the like.

In embodiments of this disclosure, a communication apparatus for implementing a function of the network device may be a network device, or may be an apparatus that can support the network device in implementing the function, for example, a chip system, and the apparatus may be installed in the network device. The technical solutions provided in embodiments of this disclosure are described by using an example in which an apparatus for implementing the function of the network device is a network device.

An antenna port in embodiments of this disclosure is a logical concept, for example, the antenna port is virtualized by using a physical antenna deployed on UE. For example, one antenna port may be obtained through virtualization by using one or more physical antennas.

In embodiments of this disclosure, unless otherwise specified, a number of nouns represents "a singular noun or a plural noun", that is, "one or more". "At least one" means one or more, and "a plurality of' means two or more. "And/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between associated objects. For example, A/B represents A or B. "At least one of the following items" or a similar expression thereof refers to any combination of these items, including a singular item or any combination of plural items. For example, at least one of a, b, or c represents a, b, c, a and b, a and c, b and c, or a, b, and c, where a, b, and c may be singular or plural.

Ordinal numerals such as "first" and "second" mentioned in embodiments of this disclosure are intended to distinguish between a plurality of objects, and are not intended to limit sizes, content, orders, time sequences, priorities, or importance degrees of the plurality of objects. For example, a first antenna port and a second antenna port may be a same antenna port or may be different antenna ports, and the names do not indicate a difference between locations, priorities, importance degrees, or the like of the two antenna ports.

Each operator has a spectrum with a plurality of consecutive or discontinuous frequencies, and UE usually configures a corresponding transmit antenna and/or receive antenna on each band. In a CA technology, spectrum resources on a same band or different bands are aggregated for coordinated transmission, to improve spectrum resource utilization. CA may be divided into intra-band (Intra-Band) CA and inter-band (Inter-Band) CA. The intra-band CA is aggregating a plurality of carriers on a same band. In UE, the carriers on the same band can share a same radio frequency link, and therefore an uplink capacity can be improved compared with single carrier transmission. The inter-band CA is aggregating carriers on different bands. In the UE, the carriers on the different bands usually have separate radio frequency links. It can be learned that a current relationship between a radio frequency link and a carrier in the UE is fixed, and cannot be adjusted by the UE. As a result, a number of transmission channels on a single carrier is limited, and an uplink capacity is limited. A radio frequency link and an antenna port connected to the radio frequency link (or referred to as an antenna port corresponding to the radio frequency link) may be referred to as a transmission channel.

In view of this, the technical solutions in embodiments of this disclosure are provided. In embodiments of this disclosure, a first antenna port included in a terminal device can be switched between at least two frequency domain units, so that a single frequency domain unit can support more antenna ports. Therefore, a maximum number of transmission channels supported by each frequency domain unit of the terminal device can be flexibly adjusted, to improve uplink transmission performance. The frequency domain unit described in embodiments of this disclosure is, for example, a carrier or a subcarrier, or may be another frequency domain unit. In the following description process, an example in which the frequency domain unit is a carrier is used. In other words, each "carrier" described in the following may be replaced with the "frequency domain unit".

UE provided in an embodiment of this disclosure is first described below with reference to the accompanying drawings.

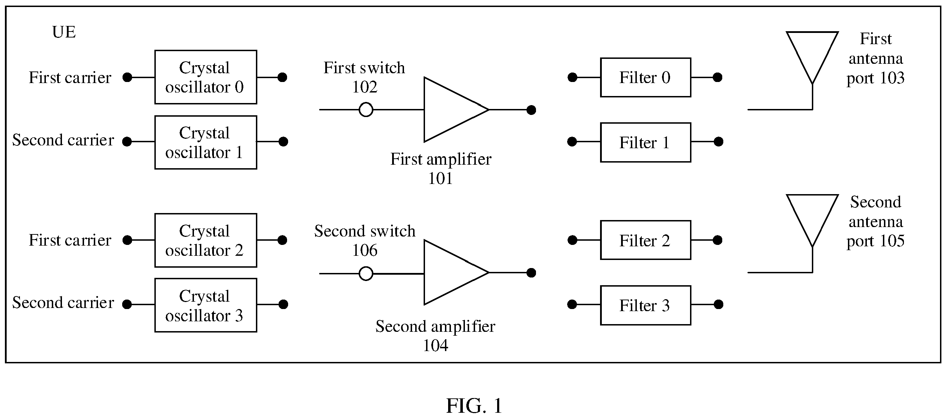

In this embodiment of this disclosure, the UE may include at least one antenna port and at least one radio frequency link. The antenna port in this embodiment of this disclosure may be used to send information, for example, used to send uplink information; or may be used to send sidelink information or the like. That the antenna port is used to send uplink information is mainly used as an example in this specification. For example, referring to FIG. 1, the at least one radio frequency link includes a first radio frequency link, and the first radio frequency link includes a first amplifier 101 and M filters connected to the first amplifier 101. For example, the first amplifier 101 may be connected to the M filters by using a switch, where M is an integer greater than or equal to 2. In addition, the M filters are connected to a first antenna port 103. For example, the first antenna port 103 may be connected to the M filters by using a switch, and the first antenna port 103 is one of the at least one antenna port. The first radio frequency link further includes a first switch 102 and M crystal oscillators. The first switch 102 is connected between the M crystal oscillators and the first amplifier 101. The M crystal oscillators are in a one-to-one correspondence with the M filters. That one crystal oscillator corresponds to one filter means that both the crystal oscillator and the filter are associated with a same carrier. For example, a 2.1 GHz crystal oscillator corresponds to a 2.1 GHz filter. Certainly, the first radio frequency link may further include another component. This is not limited in this embodiment of this disclosure. The first amplifier 101 is, for example, a power amplifier (power amplifier, PA). The first switch 102 can be switched between the M crystal oscillators, the first amplifier 101 can be switched between the M filters, and the first antenna port 103 can also be switched between the M filters. In addition, different crystal oscillators are associated with different carriers, for example, the M crystal oscillators are associated with M carriers. Therefore, the first antenna port 103 can be switched to different carriers through switching of the first switch 102, switching of the first amplifier 101, and switching of the first antenna port 103. A network device may schedule, based on different cases (for example, uplink channel quality), the UE to connect the first antenna port 103 to a corresponding filter, to send uplink information on a carrier associated with the filter, so that a number of antenna ports that can be supported by each carrier of a terminal device can be flexibly adjusted, to improve uplink transmission performance.

One crystal oscillator is associated with one carrier (which may alternatively be to as that one crystal oscillator corresponds to one carrier), and one crystal oscillator is associated with one filter (which may alternatively be referred to as that one crystal oscillator corresponds to one filter). Therefore, it can be considered that one filter is associated with one carrier (which may alternatively be referred to as that one filter corresponds to one carrier). That one crystal oscillator is associated with one carrier can be understood as that the first amplifier 101 is switched to the crystal oscillator, so that a transmission channel in which the first amplifier 101 is located can send information on the carrier. That one filter is associated with one carrier can be understood as that the filter may be configured to filter out a frequency other than a frequency of the carrier. For example, in FIG. 1, the M crystal oscillators include a crystal oscillator 0 and a crystal oscillator 1, and the M filters include a filter 0 and a filter 1. The filter 0 is associated with the crystal oscillator 0, both the crystal oscillator 0 and the filter 0 are associated with a first carrier, the filter 1 is associated with the crystal oscillator 1, and both the crystal oscillator 1 and the filter 1 are associated with a second carrier. This can be understood as the following: The filter 0 can filter out a frequency other than a frequency of the first carrier, and the filter 1 can filter out a frequency other than a frequency of the second carrier.

It can be understood that the first switch 102 may be implemented by using a switch component, or may be implemented by using a functional module. For example, the functional module is referred to as a switch module, a switching module, a switch switching module, or the like. Any functional module or component that enables the first amplifier 101 to switch between the M crystal oscillators can be used as the first switch 102. In an implementation of the first switch 102, for example, the first switch 102 is implemented by using a single-pole multi-throw switch. The single-pole multi-throw switch can be connected to two or more crystal oscillators. FIG. 1 uses the single-pole multi-throw switch as an example. In addition, in FIG. 1, an example in which the first switch 102 is connected to two crystal oscillators is used, and the two crystal oscillators are respectively associated with the first carrier and the second carrier.

In addition, the at least one radio frequency link may further include a second radio frequency link, and the second radio frequency link includes a second amplifier 104 and N filters connected to the second amplifier 104, where N is an integer greater than or equal to 1. In addition, the second radio frequency link further includes N crystal oscillators, and the N crystal oscillators correspond to the N filters. If N is equal to 1, it indicates that the second radio frequency link includes one filter and one crystal oscillator. In this case, the second amplifier 104 and the crystal oscillator may be directly connected without a switch, the second amplifier 104 and the filter may also be directly connected without a switch, and the filter and a second antenna port 105 in the at least one antenna port may also be directly connected without a switch. Because the second radio frequency link includes one filter and one crystal oscillator, the second antenna port 105 cannot be switched between different carriers, and sends only information on the second carrier associated with the second antenna port 105. Alternatively, N may be greater than 1, which indicates that the second radio frequency link includes a plurality of filters and a plurality of crystal oscillators. In this case, the second radio frequency link may further include a second switch 106, and the N crystal oscillators are connected to the second amplifier 104 by using the second switch 106. The second switch 106 can be switched between the N crystal oscillators, the second amplifier 104 can be switched between the N filters, and the second antenna port 105 also can be switched between the N filters. In addition, different crystal oscillators are associated with different carriers, for example, the N crystal oscillators are associated with N carriers. Therefore, the second antenna port 105 can be switched to different carriers through switching of the second switch 106, switching of the second amplifier 104, and switching of the second antenna port 105, to send information on different carriers. For example, in FIG. 1, the N crystal oscillators include a crystal oscillator 2 and a crystal oscillator 3, and the N filters include a filter 2 and a filter 3. The crystal oscillator 2 and the filter 2 are associated with the first carrier, and the crystal oscillator 3 and the filter 3 are associated with the second carrier. One radio frequency link is enabled to include more crystal oscillators and more filters, so that one or more antenna ports included in the UE can be switched to more carriers. Therefore, information on more carriers can be sent, and flexibility is relatively high. The network device may schedule an antenna port used by the terminal device to send uplink information on each carrier, to improve uplink transmission performance.

The M carriers may be completely the same as the N carriers, for example, the M carriers are the first carrier and the second carrier, and the N carriers are also the first carrier and the second carrier. Alternatively, the M carriers and the N carriers may have an intersection but not completely the same, for example, the M carriers are the first carrier and the second carrier, and the N carriers are the first carrier and a third carrier; or the M carriers are the first carrier, the second carrier, and the third carrier, and the N carriers are the first carrier and the second carrier. Alternatively, the M carriers may be completely different from the N carriers, for example, the M carriers are the first carrier and the second carrier, and the N carriers are the third carrier and a fourth carrier, and so on. For example, if the M carriers and the N carriers are completely the same or have an intersection, one carrier can be connected to two or more antenna ports by using a switch, thereby improving uplink transmission performance.

Similarly, the second switch 106 may be implemented by using a switch component, or may be implemented by using a functional module. For example, the functional module is referred to as a switch module, a switching module, a switch switching module, or the like. Any functional module or component that enables the second amplifier 104 to switch between the N crystal oscillators can be used as the second switch 106. All switches included in the UE that are connected to the crystal oscillators may be considered as belonging to one functional module, that is, functions of all the switches included in the UE that are connected to the crystal oscillators may be completed by using one functional module. For example, the first switch 102 and the second switch 106 may belong to one functional module. Alternatively, the switches included in the UE that are connected to the crystal oscillators may be considered as different functional modules. For example, the first switch 102 and the second switch 106 may be different functional modules.

In an implementation of the second switch 106, for example, the second switch 106 is also implemented by using a single-pole multi-throw switch. The single-pole multi-throw switch can be connected to two or more crystal oscillators. FIG. 1 uses the single-pole multi-throw switch as an example. In addition, in FIG. 1, an example in which the second switch 106 is connected to two crystal oscillators and the M carriers and the N carriers are completely the same is used. For example, in FIG. 1, the M carriers are the first carrier and the second carrier, and the N carriers are also the first carrier and the second carrier.

Certainly, the at least one radio frequency link may include only the first radio frequency link and the second radio frequency link, or the at least one radio frequency link further includes another radio frequency link in addition to the first radio frequency link and the second radio frequency link. If the at least one radio frequency link further includes another radio frequency link, the included radio frequency link may include one or more crystal oscillators. An implementation of the radio frequency link is similar to an implementation of the second radio frequency link. For details, refer to the foregoing description. A number of antenna ports included in the UE, a number of radio frequency links included in the UE, a number of crystal oscillators or filters included in one radio frequency link, and the like may be set based on corresponding factors. These factors include, for example, a performance requirement of the UE, and may further include costs of the UE, a size of the UE, or the like. This is not limited in this embodiment of this disclosure. The case shown in FIG. 1 is merely an example.

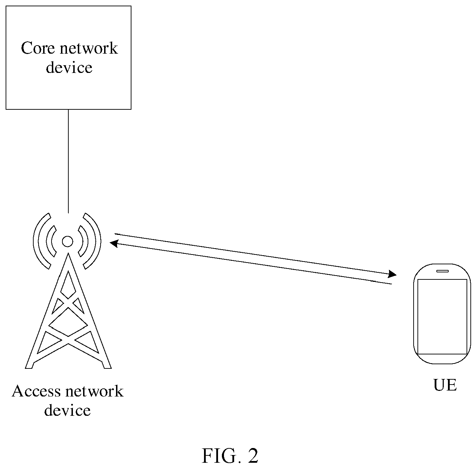

FIG. 2 shows an application scenario of an embodiment of this disclosure. FIG. 2 includes an access network device, a core network device, and UE. For example, the access network device works in an evolved universal mobile telecommunications system terrestrial radio access (evolved UMTS terrestrial radio access, E-UTRA) system, or works in an NR system, or works in a next-generation communication system or another communication system. The access network device is, for example, a base station. The access network device corresponds to different devices in different systems. For example, the access network device may correspond to an eNB in a 4G system, and in a 5G system, correspond to an access network device in 5G, for example, a gNB. Certainly, the technical solutions provided in embodiments of this disclosure may also be applied to a future mobile communication system. Therefore, the access network device in FIG. 2 may also correspond to a network device in the future mobile communication system. In FIG. 2, an example in which the access network device is a base station is used. Actually, with reference to the foregoing descriptions, the access network device may alternatively be a device like an RSU. In addition, an example in which the UE in FIG. 2 is a mobile phone is used. Actually, based on the foregoing description of the UE, it can be learned that the UE in this embodiment of this disclosure is not limited to the mobile phone.

For ease of description, an example in which embodiments to be described below are applied to the architecture shown in FIG. 2 is used. For example, network devices in the following embodiments each are, for example, the access network device in the network architecture shown in FIG. 2, and UE in the following embodiments may be the UE in the network architecture shown in FIG. 2.

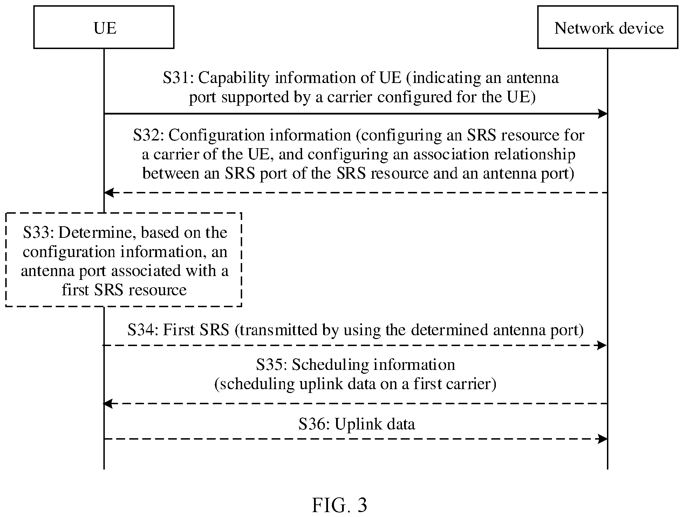

The foregoing describes the UE provided in embodiments of this disclosure and the application scenario of embodiments of this disclosure. The following describes a method provided in embodiments of this disclosure with reference to the accompanying drawings. FIG. 3 is a procedure of a communication method according to an embodiment of this disclosure. The method may be implemented by the UE described in FIG. 1.

S31: The UE sends a first message to a network device, and correspondingly, the network device receives the first message from the UE. The first message may include capability information of the UE. For example, the first message is a radio resource control (radio resource control, RRC) message. The RRC message may be sent by the UE to the network device after the UE succeeds in random access and before the UE sends uplink data to the network device. Optionally, the RRC message is, for example, a UE capability information (UE capability information) message, or may be another RRC message.

The UE may determine the capability information of the UE and send the capability information to the network device. The capability information may indicate an antenna port supported by each of P carriers configured for the UE. The P carriers may include all carriers configured for the UE, or include some carriers configured for the UE, where P is an integer greater than 1. For example, the P carriers include at least two carriers, and the at least two of the P carriers may be associated with respective uplink transmission configuration information. To be specific, uplink transmission channels are configured for the at least two carriers, and the at least two carriers receive configuration information from the network device, for example, the configuration information is referred to as configuration information A. The configuration information A is used to configure the uplink transmission configuration information of the at least two frequency domain units. An antenna port is switched between carriers configured with uplink transmission channels, so that a maximum number of uplink transport streams of each carrier can be flexibly adjusted, thereby improving uplink transmission performance. In this embodiment of this disclosure, an antenna port supported by a carrier may include an antenna port associated with the carrier and an antenna port that can be switched to the carrier. The antenna port associated with the carrier refers to an antenna port that can send information on the carrier without switching by a switch, or an antenna port that can send the information on the carrier when no switch is disposed between an amplifier and a crystal oscillator (or no a plurality of crystal oscillators is disposed) and no a plurality of filters are disposed. The antenna port that can be switched to the carrier refers to an antenna port that can send the information on the carrier after switching by using a switch. For example, an antenna port supported by an i^{th} carrier includes an antenna port associated with the i^{th} carrier and an antenna port that is in antenna ports associated with *Nᵢ* carriers and that can be switched to the i^{th} carrier. The *Nᵢ* carriers belong to the P carriers and do not include the i^{th} carrier, and *Nᵢ* is an integer greater than or equal to 1 and less than P.

For example, for the UE shown in FIG. 1, the capability information may indicate that an antenna port supported by the first carrier includes the first antenna port 103 and the second antenna port 105, and may indicate that an antenna port supported by the second carrier includes the first antenna port 103 and the second antenna port 105. For the first carrier, the first antenna port 103 is an antenna port associated with the first carrier, and the second antenna port 105 is an antenna port that can send information on the first carrier through switching. For the second carrier, the second antenna port 105 is an antenna port associated with the second carrier, and the first antenna port 103 is an antenna port that can send information on the second carrier through switching.

The capability information may indicate, in different indication manners, the antenna port supported by each of the P carriers. The following uses examples for description.

### 1. First manner of indicating an antenna port by the capability information

The capability information includes information about the antenna port supported by the i^{th} carrier in the P carriers. For example, information about an antenna port is a number (or referred to as an index) of the antenna port, or may be an identifier or the like of the antenna port.

The UE may set an index for each antenna port included in the UE. For example, if the UE includes the first antenna port 103 and the second antenna port 105, the UE may set indexes for the first antenna port 103 and the second antenna port 105. For example, the UE may set the indexes for the antenna ports in ascending order of carrier frequencies, or the UE may set the indexes for the antenna ports in descending order of carrier frequencies, or the UE may set the indexes randomly. The UE may indicate a corresponding antenna port by using an index of the antenna port, and the index is also known to the network device. For example, the UE may send the index of the antenna port to the network device in advance. For example, the UE may add an index of the antenna port supported by each of the P carriers to the capability information and send the capability information to the network device, so that the network device can determine, based on the capability information, the antenna port supported by each carrier.

For example, for the i^{th} carrier in the P carriers, the capability information may include an index *xᵢ* of the antenna port supported by the i^{th} carrier in the P carriers, where *xᵢ* is an integer greater than or equal to 1 and less than or equal to *Nₜ*, or *xᵢ* is a nonnegative integer less than *Nₜ*, and *Nₜ* is a total number of antenna ports associated with the P carriers. That i is an integer greater than or equal to 1 and less than or equal to P can be understood as that the i^{th} carrier is any one of the P carriers. FIG. 1 is used as an example. For example, if an index of the first antenna port 103 is 0, and an index of the second antenna port 105 is 1, indexes that are of antenna ports supported by the first carrier and that are included in the capability information are 0 and 1. A total number of antenna ports associated with the first carrier and the second carrier is 2, and both 0 and 1 are less than 2.

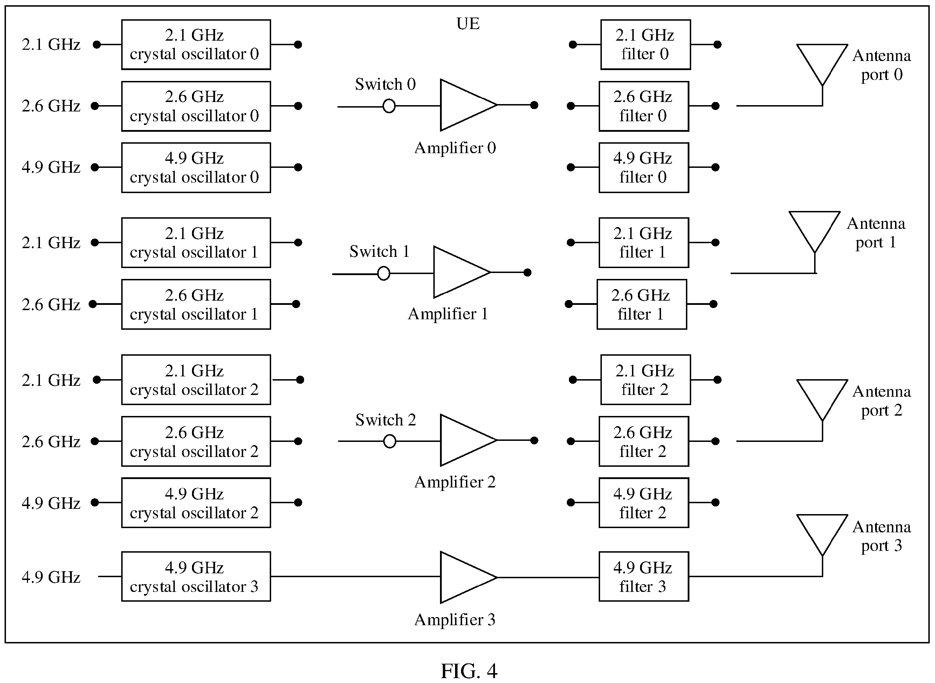

For ease of understanding, the following provides a specific example of a structure of the UE, and reference may be made to FIG. 4. The structure of the UE shown in FIG. 4 is an example of the structure of the UE shown in FIG. 1. In FIG. 4, an example in which the UE supports a 2.1 GHz carrier, a 2.6 GHz carrier, and a 4.9 GHz carrier is used. In actual application, the UE may support more or fewer carriers, frequencies of carriers supported by the UE may also be different, and quantities of radio frequency links associated with carriers supported by the UE may also be different. The 2.1 GHz carrier is associated with a radio frequency link 0, a radio frequency link 1, and a radio frequency link 2, the 2.6 GHz carrier is associated with the radio frequency link 0, the radio frequency link 1, and the radio frequency link 2, the 4.9 GHz carrier is associated with the radio frequency link 0, the radio frequency link 2, and a radio frequency link 3. The radio frequency link 0, the radio frequency link 1, the radio frequency link 2, and the radio frequency link 3 each are connected to an antenna port. The radio frequency link 0 is a radio frequency link including an amplifier 0, the radio frequency link 1 is a radio frequency link including an amplifier 1, the radio frequency link 2 is a radio frequency link including an amplifier 2, and the radio frequency link 3 is a radio frequency link including an amplifier 3. The radio frequency link 0 includes three filters: a 2.1 GHz filter 0, a 2.6 GHz filter 0, and a 4.9 GHz filter 0, and further includes three crystal oscillators: a 2.1 GHz crystal oscillator 0, a 2.6 GHz crystal oscillator 0, and a 4.9 GHz crystal oscillator 0. The radio frequency link 1 includes two filters: a 2.1 GHz filter 1 and a 2.6 GHz filter 1, and further includes two crystal oscillators: a 2.1 GHz crystal oscillator 1 and a 2.6 GHz crystal oscillator 1. The radio frequency link 2 includes three filters: a 2.1 GHz filter 2, a 2.6 GHz filter 2, and a 4.9 GHz filter 2, and further includes three crystal oscillators: a 2.1 GHz crystal oscillator 2, a 2.6 GHz crystal oscillator 2, and a 4.9 GHz crystal oscillator 2. The radio frequency link 3 includes a 4.9 GHz filter 3, and further includes a 4.9 GHz crystal oscillator 3. The 2.1 GHz filter is a filter that can filter out a frequency other than 2.1 GHz, the 2.6 GHz filter is a filter that can filter out a frequency other than 2.6 GHz, and the 4.9 GHz filter is a filter that can filter out a frequency other than 4.9 GHz. The 2.1 GHz crystal oscillator is a crystal oscillator that enables the connected amplifier to amplify a signal of the 2.1 GHz frequency, the 2.6 GHz crystal oscillator is a crystal oscillator that enables the connected amplifier to amplify a signal of the 2.6 GHz frequency, and the 4.9 GHz crystal oscillator is a crystal oscillator that enables the connected amplifier to amplify a signal of the 4.9 GHz frequency.

The radio frequency link 0 includes three crystal oscillators, and therefore, the three crystal oscillators are connected to the amplifier 0 by using a switch 0, and the switch 0 can be switched between the three crystal oscillators. In addition, the amplifier 0 may be further connected to the three filters of the radio frequency link 0, and the three filters may be further connected to an antenna port 0. Similarly, the two crystal oscillators and the amplifier 1 of the radio frequency link 1 are connected by using a switch 1, and the switch 1 can be switched between the two crystal oscillators included in the radio frequency link 1. In addition, the amplifier 1 may be further connected to the two filters of the radio frequency link 1, and the two filters may be further connected to an antenna port 1. The three crystal oscillators and the amplifier 2 of the radio frequency link 2 are connected by using a switch 2, and the switch 2 can be switched between the three crystal oscillators included in the radio frequency link 2. In addition, the amplifier 2 may be further connected to the three filters of the radio frequency link 2, and the three filters may be further connected to an antenna port 2. The radio frequency link 3 includes one crystal oscillator, and therefore, the crystal oscillator and the amplifier 3 do not need to be connected to a switch. In addition, the amplifier 3 may be further connected to the filter of the radio frequency link 3, and the filter may be connected to an antenna port 3.

The UE may number the four antenna ports in FIG. 4. For example, the UE may number the antenna ports in ascending order of carrier frequencies, or the UE may number the antenna ports in descending order of carrier frequencies, or the UE may number the antenna ports randomly. An example in which the UE numbers the antenna ports in ascending order of carrier frequencies is used. For example, the UE may respectively number the four antenna ports as 0 (which may be referred to as an antenna port 0), 1 (which may be referred to as an antenna port 1), 2 (which may be referred to as an antenna port 2), and 3 (which may be referred to as an antenna port 3). The antenna port 0 is connected to the radio frequency link 0, the antenna port 1 is connected to the radio frequency link 1, the antenna port 2 is connected to the radio frequency link 2, and the antenna port 3 is connected to the radio frequency link 3. In addition, for example, the 2.1 GHz carrier is associated with the antenna port 0, the 2.6 GHz carrier is associated with the antenna port 1, and the 4.9 GHz carrier is associated with the antenna port 2 and the antenna port 3. Through switching of the switch 0, the antenna port 0 can be switched to the 2.1 GHz carrier, switched to the 2.6 GHz carrier, or switched to the 4.9 GHz carrier. Through switching of the switch 1, the antenna port 1 can be switched to the 2.1 GHz carrier or switched to the 2.6 GHz. Through switching of the switch 2, the antenna port 2 can be switched to the 2.1 GHz carrier, switched to the 2.6 GHz carrier, or switched to the 4.9 GHz carrier. The antenna port 3 may be associated with the 4.9 GHz carrier.

FIG. 4 is used as an example. For the 2.1 GHz carrier, an antenna port associated with the carrier includes the antenna port 0, and an antenna port that can be switched to the carrier includes the antenna port 1 and the antenna port 2. For the 2.6 GHz carrier, an antenna port associated with the carrier includes the antenna port 1, and an antenna port that can be switched to the carrier includes the antenna port 0 and the antenna port 2. For the 4.9 GHz carrier, an antenna port associated with the carrier includes the antenna port 2 and the antenna port 3, and an antenna port that can be switched to the carrier includes the antenna port 0.

FIG. 4 is still used as an example. If the capability information indicates an antenna port supported each of carriers configured for the UE, the capability information determined by the UE may indicate the following: An antenna port supported by the 2.1 GHz carrier includes the antenna port 0, the antenna port 1, and the antenna port 2, an antenna port supported by the 2.6 GHz carrier includes the antenna port 0, the antenna port 1, and the antenna port 2, and an antenna port supported by the 4.9 GHz carrier includes the antenna port 0, the antenna port 2, and the antenna port 3. For example, antenna ports supported by a carrier may be included in the capability information in a form of a set. In this case, the capability information may include: an antenna port set {antenna port 0, antenna port 1, antenna port 2} supported by the 2.1 GHz carrier, an antenna port set {antenna port 0, antenna port 1, antenna port 2} supported by the 2.6 GHz carrier, and an antenna port set {antenna port 0, antenna port 2, antenna port 3} supported by the 4.9 GHz carrier.

In this implementation, the capability information is more explicit, which helps the network device more clearly determine the capability information of the UE.

For example, the first message is a UE capability information message, and the UE capability information message may include a BandCombinationList information element (BandCombinationList information element) field. The BandCombinationList information element field is originally used to carry a bandwidth combination of carrier aggregation supported by the UE and/or a multi-radio access technology dual connectivity (multi-RAT dual connectivity, MR-DC) bandwidth combination supported by the UE. The BandCombinationList information element field may include a BandParameters (BandParameters) field. For example, the capability information indicates the antenna port in the first manner. In this embodiment of this disclosure, the capability information may be carried in the BandParameters field. For example, a structure for carrying the capability information by using the BandParameters field is as follows:

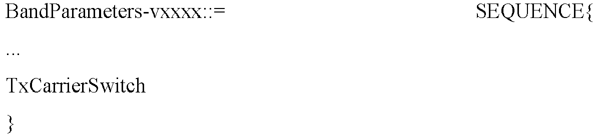

"BandParameters-vxxxx" represents the BandParameters field included in the BandCombinationList information element field, and "TxCarrierSwitch" (TxCarrierSwitch) represents information about the antenna ports supported by the P carriers configured for the UE. Certainly, the capability information provided in this embodiment of this disclosure may have another name, and "TxCarrierSwitch" is merely an example.

### 2. Second manner of indicating an antenna port by the capability information

The capability information may indicate a total number of antenna ports of the UE. For example, the total number of antenna ports of the UE is *Nₜ*. For example, the *Nₜ* antenna ports are antenna ports associated with the P carriers configured for the UE. FIG. 4 is used as an example. The 2.1 GHz carrier is associated with the antenna port 0, the 2.6 GHz carrier is associated with the antenna port 1, and the 4.9 GHz carrier is associated with the antenna port 2 and the antenna port 3. In this case, *Nₜ* is 4, and the capability information indicates that the total number of antenna ports of the UE is 4.

If the capability information performs indication in this manner, the network device may be unable to determine which carrier is associated with which antenna port. However, this indication manner is relatively simple and has a relatively small information amount, thereby helping reduce signaling overheads.

### 3. Third manner of indicating an antenna port by the capability information

The capability information may indicate a number of antenna ports associated with the i^{th} carrier in the P carriers. For example, the number is *Mᵢ*, where *Mᵢ* is an integer greater than or equal to 1, and *Mᵢ* is less than or equal to a total number of antenna ports associated with the P carriers. For example, the capability information may indicate a number of antenna ports associated with each of the P carriers, where the number of antenna ports associated with the i^{th} carrier is *Mᵢ*; or the capability information may indicate a number of antenna ports associated with each of some of the P carriers, where the number of antenna ports associated with the i^{th} carrier is *Mᵢ*. Different carriers in the P carriers may be associated with a same number of antenna ports, or may be associated with different quantities of antenna ports.

In addition, the first message may further include first information. The first information may indicate information about an antenna port that is in the *Mᵢ* antenna ports and that can be switched to a j^{th} carrier, where i is unequal to j, and both i and j are integers greater than or equal to 1 and less than or equal to P. The first information may be included in the first message, but does not belong to capability information; or the first information may belong to the capability information. Herein, an example in which the first information belongs to the capability information is used. For example, the first information may indicate switching information of the antenna port associated with each of the P carriers. Herein, an example in which the first information indicates switching information of the antenna port associated with the i^{th} carrier is used. A switching relationship between an antenna port and a carrier can be explicitly indicated through the indication of the capability information. In addition, the number of antenna ports associated with the i^{th} carrier in the P carriers may be originally included in the capability information. To be specific, even if no a plurality of crystal oscillators is disposed for a radio frequency link of the UE, the UE may still need to send the capability information to the network device. In this case, a number of antenna ports associated with the carrier configured for the UE is originally included in the capability information. The first information may be content extended in the capability information in this embodiment of this disclosure. This is equivalent to the following: In this manner, existing information in the capability information may be used, and corresponding information (for example, the first information) may be further added to the capability information, to indicate the antenna ports supported by the P carriers configured for the UE in this embodiment of this disclosure, thereby improving utilization of the original information in the capability information. For example, a rule for numbering an antenna port is specified in a protocol. For example, the protocol specifies that an index is set for an antenna port in ascending order of carrier frequencies, or the protocol specifies that an index is set for an antenna port in descending order of carrier frequencies. In this case, both the UE and the network device can determine the numbering rule. Therefore, the network device can determine a relationship between an index and an antenna port.

The first information may indicate, in different indication manners, the information about the antenna port that is in the *Mᵢ* antenna ports and that can be switched to the j^{th} carrier. The following uses examples for description.

In an optional implementation in which the first information indicates the information about the antenna port that is in the *Mᵢ* antenna ports and that can be switched to the j^{th} carrier, the first information may indicate a number of antenna ports that are in the *Mᵢ* antenna ports and that can be switched to the j^{th} carrier. For example, referring to FIG. 4, the 4.9 GHz carrier is associated with the antenna port 2 and the antenna port 3, and the first information may indicate a number of antenna ports that are in the antenna port 2 and the antenna port 3 and that can be switched to the 2.1 GHz carrier. Based on FIG. 4, it can be learned that the antenna port 2 can be switched to the 2.1 GHz carrier, and therefore for the 4.9 GHz carrier, the first information indicates that the number of antenna ports that can be switched to the 2.1 GHz carrier is 1. In addition, based on FIG. 4, it can be learned that the antenna port 2 can be switched to the 2.6 GHz carrier, and therefore for the 4.9 GHz carrier, the first information indicates that a number of antenna ports that can be switched to the 2.6 GHz carrier is 1.

In this indication manner, if *Mᵢ* is 1, the network device knows how to switch the *Mᵢ* antenna ports associated with the i^{th} carrier, provided that the network device obtains the first information. However, if *Mᵢ* is greater than 1, after obtaining the first information, the network device may be unable to determine a specific antenna port in the *Mᵢ* antenna ports that is switched to the j^{th} carrier. However, only a number of antenna ports needs to be indicated in this indication manner, so that the indication is relatively simple, and signaling overheads are relatively low.

In another optional implementation in which the first information indicates the information about the antenna port that is in the *Mᵢ* antenna ports and that can be switched to the j^{th} carrier, the first information may indicate that an m^{th} antenna port in the *Mᵢ* antenna ports can be switched to the j' frequency domain unit, where m=1, 2, ..., and *Mᵢ*, or m=0, 1, ..., and *Mᵢ*-1. For example, referring to FIG. 4, the 4.9 GHz carrier is associated with the antenna port 2 and the antenna port 3, and the first information may indicate that the antenna port 2 can be switched to the 2.1 GHz carrier, and may indicate that the antenna port 2 can be switched to the 2.6 GHz carrier. In this indication manner, the network device can determine a specific antenna port in the *Mᵢ* antenna ports that is switched to the j^{th} carrier, so that the indication is clearer. For example, the first information may be implemented in a form of a bitmap (bitmap). A number of bits included in the bitmap is equal to *Mᵢ*, and the *Mᵢ* bits are in a one-to-one correspondence with the *Mᵢ* antenna ports. If a value of a bit included in the bitmap is "1", it indicates that an antenna port corresponding to the bit can be switched to the j^{th} carrier. If a value of a bit included in the bitmap is "0", it indicates that an antenna port corresponding to the bit cannot be switched to the j^{th} carrier. For example, a switching relationship between the 2.1 GHz carrier and the two antenna ports corresponding to the 4.9 GHz carrier in FIG. 4 may correspond to a bitmap " 10", where a most significant bit represents the antenna port 2, and a least significant bit represents the antenna port 3. The bitmap indicates that the antenna port 2 can be switched to the 2.1 GHz carrier, but the antenna port 3 cannot be switched to the 2.1 GHz carrier. A switching relationship between the 2.6 GHz carrier and the two antenna ports corresponding to the 4.9 GHz carrier in FIG. 4 may correspond to the same bitmap.

To make the indication of the capability information clearer, in addition to indicating the number of antenna ports associated with the P carriers and indicating that the m^{th} antenna port in the *Mᵢ* antenna ports can be switched to the j^{th} frequency domain unit, optionally, the capability information may further include a first set and a second set. The first set includes information about at least one carrier, the second set includes information about at least one carrier, a number of carriers corresponding to the carrier information included in the first set may be less than or equal to P, and a number of carriers corresponding to the carrier information included in the second set may be less than or equal to P. In addition, an antenna port associated with information about an r^{th} carrier included in the second set can be switched to an r^{th} carrier included in the first set, where r is an integer greater than or equal to 0, and r is less than or equal to P.

For example, in FIG. 4, numbering is performed according to a predefined rule in ascending order of carrier frequencies. The 2.1 GHz carrier is associated with one antenna port, and the antenna port is the antenna port 0; the 2.6 GHz carrier is associated with one antenna port, and the antenna port is the antenna port 1; and the 4.9 GHz carrier is associated with two antenna ports, and the two antenna ports are the antenna port 2 and the antenna port 3. This is used as an example. In addition, for example, if the P carriers are the 2.1 GHz carrier, the 2.6 GHz carrier, and the 4.9 GHz carrier, the number that is of antenna ports associated with each of the P carriers and that is included in the capability information may include: A number of antenna ports associated with the 2.1 GHz carrier (or expressed as a maximum number of transport layers supported by the 2.1 GHz carrier (for example, expressed as a maximum number of input/output layers corresponding to a physical uplink shared channel (maxNumberMIMO-LayersCB-PUSCH))) is 1, a number of antenna ports associated with the 2.6 GHz carrier is 1, and a number of antenna ports associated with the 4.9 GHz carrier is 2. In addition, the capability information further includes a first set, a second set, and first information. For example, the first set is {2.1 GHz, 2.1 GHz, 2.6 GHz, 2.6 GHz, 4.9 GHz}, and the second set is {2.6 GHz, 4.9 GHz, 2.1 GHz, 4.9 GHz, 2.1 GHz}. This indicates the following: An antenna port associated with a 2.6 GHz carrier can be switched to a 2.1 GHz carrier, for example, referring to FIG. 4, the antenna port 1 associated with the 2.6 GHz carrier can be switched to the 2.1 GHz carrier. An antenna port associated with a 4.9 GHz carrier can be switched to a 2.1 GHz carrier, for example, referring to FIG. 4, the antenna port 2 associated with the 4.9 GHz carrier can be switched to the 2.1 GHz carrier. An antenna port associated with a 2.1 GHz carrier can be switched to a 2.6 GHz carrier, for example, referring to FIG. 4, the antenna port 0 associated with the 2.1 GHz carrier can be switched to the 2.6 GHz carrier. An antenna port associated with a 4.9 GHz carrier can be switched to a 2.6 GHz carrier, for example, referring to FIG. 4, the antenna port 2 associated with the 4.9 GHz carrier can be switched to the 2.6 GHz carrier. An antenna port associated with a 2.1 GHz carrier can be switched to a 4.9 GHz carrier, for example, referring to FIG. 4, the antenna port 0 associated with the 2.1 GHz carrier can be switched to the 4.9 GHz carrier.

Based on FIG. 1 or FIG. 4, it can be learned that some carriers may be associated with a plurality of antenna ports, for example, the 4.9 GHz carrier is associated with the antenna port 2 and the antenna port 3. The first set and the second set indicate that the antenna port associated with the 4.9 GHz carrier can be switched to the 2.1 GHz carrier, and the antenna port associated with the 4.9 GHz carrier can also be switched to the 2.6 GHz carrier. In this case, the network device may be unable to determine a specific antenna port that is associated with the 4.9 GHz carrier and that is switched to the 2.1 GHz carrier, and may be unable to determine a specific antenna port that is associated with the 4.9 GHz carrier and that is switched to the 2.6 GHz carrier. Therefore, the capability information may further include the first information. The first information may indicate a switching relationship between a carrier included in the first set and an antenna port associated with one or more carriers indicated by the second set.

FIG. 4 is still used as an example. For example, the second set includes information about the 4.9 GHz carrier, the 4.9 GHz carrier is associated with two antenna ports, and the first set and the second set indicate that the antenna port associated with the 4.9 GHz carrier can be switched to both the 2.1 GHz carrier and the 2.6 GHz carrier. In this case, the first information may indicate a specific antenna port that is associated with the 4.9 GHz carrier included in the second set and that is switched to the 2.1 GHz carrier, and indicate a specific antenna port that is associated with the 4.9 GHz carrier included in the second set and that is switched to the 2.6 GHz carrier. For example, the first information is {a, b}, where a and b respectively represent the antenna port 2 and the antenna port 3. In ascending order of carrier frequencies, a indicates switching information of the antenna port 2, and b indicates switching information of the antenna port 3. For example, if the first information is {01, 01}, and "01" represents the 2.1 GHz carrier, the first information indicates that the antenna port 2 is switched to the 2.1 GHz carrier, and indicates that the antenna port 2 is switched to the 2.6 GHz carrier. Alternatively, the first information may be implemented in a form of a bitmap. This is not limited.

If the capability information includes a plurality of pieces of information about carriers associated with a plurality of antenna ports, the first information may include switching relationships between the antenna ports associated with the plurality of carriers. The switching relationships between the antenna ports associated with the carriers are similar, and details are not described.

For another example, the first message is a UE capability information message, the UE capability information message includes an ULTxSwitchingBandPair (ULTxSwitchingBandPair) field, and the ULTxSwitchingBandPair field includes information about an antenna port connected to a radio frequency link associated with a carrier configured for the UE. For example, the capability information indicates an antenna port in the foregoing second manner. In this embodiment of this disclosure, a first set, a second set, and first information are added to the ULTxSwitchingBandPair field. For example, a structure for carrying the capability information by using the ULTxSwitchingBandPair field is as follows:

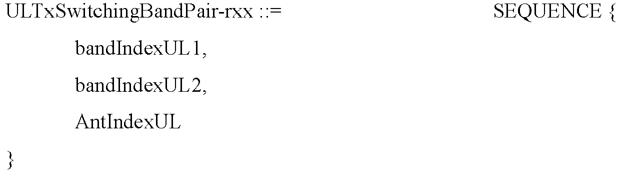

The "bandIndexUL1" (bandIndexUL1) represents the first set, the "bandIndexUL2" (bandIndexUL2) represents the second set, and the "AntIndexUL" (AntIndexUL) represents the first information.

Certainly, regardless of an implementation used for the capability information, the capability information may alternatively be included in a message other than the UE capability information message. Even if the capability information is included in the UE capability information message, the capability information may alternatively be carried by using another field. For example, the capability information may be carried by using a field newly added to the UE capability information message. Moreover, in addition to indicating the antenna ports supported by the P carriers, the capability information may further indicate another capability of the UE. This is not limited in this embodiment of this disclosure.

S32: The network device sends configuration information to the UE, and correspondingly, the UE receives the configuration information from the network device.

The configuration information may be used to configure a sounding reference signal (sounding reference signal, SRS) resource for a carrier of the UE. Optionally, the configuration information may be further used to configure an association relationship between an SRS port of the SRS resource and an antenna port of the UE. For example, the configuration information may be used to configure an SRS resource for each of the P carriers of the UE, the P carriers may be all or some of carriers configured for the UE, and the configuration information may be used to configure an association relationship between an SRS port of each configured SRS resource and an antenna port of the UE. The configuration information may be used to configure one or more SRS resources for one carrier, and one SRS resource may correspond to one or more SRS ports. For example, a first carrier is a carrier configured for the UE. The configuration information may be used to configure one or more SRS resources for the first carrier, and may be used to configure an association relationship between an SRS port of the one or more SRS resources and an antenna port supported by the first carrier. That one SRS port of one SRS resource is associated with one antenna port can be understood as that an SRS corresponding to the SRS port is sent by using the antenna port. For one of the one or more SRS resources of the first carrier, a number of SRS ports of the SRS resource may be a positive integer less than or equal to a number of antenna ports associated with the first carrier. In this way, each SRS resource configured for the carrier can be sent normally. Alternatively, for one of the one or more SRS resources of the first carrier, a number of SRS ports of the SRS resource may be a positive integer greater than the number of antenna ports associated with the first carrier. In this way, an uplink channel that is enabled through switching of a switch for transmission can accordingly be measured. Certainly, this is not limited in this embodiment of this disclosure. For example, for one of the one or more SRS resources corresponding to the first carrier, a number of SRS ports of the SRS resource may alternatively be a positive integer greater than a number of antenna ports supported by the first carrier.

In addition, SRS ports of different SRS resources configured for a carrier may be associated with different antenna ports. For example, an SRS resource A and an SRS resource B are configured for the first carrier, the SRS resource A corresponds to an SRS port a, and the SRS resource B corresponds to an SRS port b. In this case, an antenna port associated with the SRS port a and an antenna port associated with the SRS port b may be different antenna ports. This is because a number of SRS ports of an SRS resource configured for a carrier may be less than or equal to a number of antenna ports associated with the carrier. Therefore, to measure a number of antenna ports supported by the UE (the number of antenna ports supported by the UE may be greater than or equal to the number of antenna ports associated with the carrier), a plurality of SRS resources need to be configured for the carrier, to measure uplink channels corresponding to different antenna ports.

For example, the configuration information is used to configure a first SRS resource and a second SRS resource. Time units occupied by the first SRS resource and the second SRS resource may be the same or may be different. If the time units occupied by the first SRS resource and the second SRS resource are different, the first SRS resource and the second SRS resource may be associated with different antenna ports, for example, the configuration information is used to configure the first SRS resource for the first carrier and configure the second SRS resource for a second carrier. Alternatively, if the time units occupied by the first SRS resource and the second SRS resource are different, the first SRS resource and the second SRS resource may be associated with a same antenna port, for example, the configuration information is used to configure the first SRS resource and configure the second SRS resource for the first carrier. However, if the first SRS resource and the second SRS occupy a same time unit, the first SRS resource and the second SRS resource are not associated with a same antenna port. In this case, the configuration information may be used to configure the two SRS resources to be associated with different antenna ports. For example, the configuration information is used to configure the first SRS resource for the first carrier and configure the second SRS resource for the second carrier. In other words, for a same antenna port, information is sent on only one carrier at one moment, and information cannot be sent on different carriers.

In addition, an existing number of SRS ports of an SRS resource may be 1, 2, or 4. However, in this embodiment of this disclosure, one carrier may support three antenna ports, and one carrier may support transmission of three antenna ports. Therefore, to support transmission of three antenna ports, in a possible implementation, the existing number of SRS ports is expanded in this embodiment of this disclosure, and an SRS resource having three SRS ports may be defined.

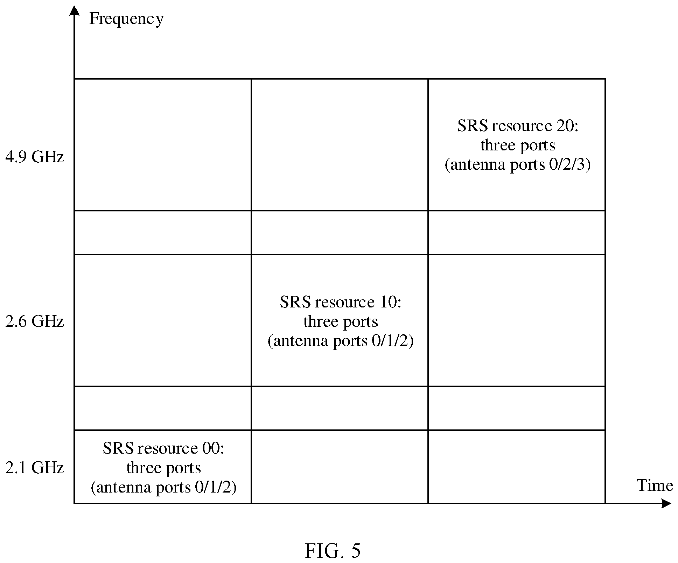

For example, based on the UE shown in FIG. 4, for a configuration of the configuration information, refer to FIG. 5. In FIG. 5, the network device configures an SRS resource 20 for the 4.9 GHz carrier, and configures three SRS ports of the SRS resource 20 to be respectively associated with the antenna port 0, the antenna port 2, and the antenna port 3 in FIG. 4; configures an SRS resource 10 for the 2.6 GHz carrier, and configures three SRS ports of the SRS resource 10 to be respectively associated with the antenna port 0, the antenna port 1, and the antenna port 2 in FIG. 4; and configures an SRS resource 00 for the 2.1 GHz carrier, and configures three SRS ports of the SRS resource 00 to be respectively associated with the antenna port 0, the antenna port 1, and the antenna port 2 in FIG. 4.

For another example, for an association relationship between SRS ports of a plurality of SRS resources shown in FIG. 5 and antenna ports of the UE, refer to Table 1.

**Table 1**

| SRS resource | SRS port | Antenna port |
|---|---|---|
| 00 | 0 | 0 |
| | 1 | 1 |
| | 2 | 2 |
| 10 | 0 | 0 |
| | 1 | 1 |
| | 2 | 2 |
| 20 | 0 | 0 |
| | 1 | 2 |
| | 2 | 3 |

Based on Table 1 and FIG. 5, it can be learned that, because the 2.1 GHz carrier, the 2.6 GHz carrier, and the 4.9 GHz carrier all can support three antenna ports, an SRS resource having three SRS ports may be configured for each of the three carriers. For example, different SRS ports of an SRS resource configured for a carrier correspond to different antenna ports, so that the SRS resource of the carrier can be sent by using each antenna port supported by the carrier.

After receiving the configuration information, the UE may not need to perform additional determining, and perform an operation based on the configuration information. Alternatively, after receiving the configuration information, the UE may determine, with reference to an actual situation of the UE and the configuration information, an association relationship between an SRS port of an SRS resource of a carrier configured for the UE and an antenna port of the UE. In other words, the configuration information is used as reference information for the UE, and the UE may determine, with reference to the actual situation of the UE, whether to perform an operation completely based on the configuration information. In this embodiment of this disclosure, an example in which the UE performs an operation based on the configuration information is used.

The network device may send the configuration information to the UE only once, and does not change the configuration information after sending the configuration information. For example, the network device sends the configuration information to the UE after the UE succeeds in random access, and does not change the configuration information after sending the configuration information. Alternatively, the network device may update the configuration information. For example, when a first condition is met, the network device may send new configuration information to the UE. The new configuration information is still used to configure an SRS resource for a carrier of the UE, and the configuration information may be further used to configure an association relationship between an SRS port of the SRS resource and an antenna port of the UE. For ease of differentiation, the original configuration information is referred to as first configuration information, and the new configuration information is referred to as second configuration information. A carrier configured by using the second configuration information may be completely the same as a carrier configured by using the first configuration information, for example, both the first configuration information and the second configuration information are used to configure the 2.1 GHz carrier and the 2.6 GHz carrier. Alternatively, a carrier configured by using the second configuration information and a carrier configured by using the first configuration information may have an intersection but not completely the same, for example, the first configuration information is used to configure the 2.1 GHz carrier and the 2.6 GHz carrier, and the second configuration information is used to configure the 2.1 GHz carrier and the 4.9 GHz carrier, or the first configuration information is used to configure the 2.1 GHz carrier and the 2.6 GHz carrier, and the second configuration information is used to configure the 2.1 GHz carrier, the 2.6 GHz carrier, and the 4.9 GHz carrier. Alternatively, a carrier configured by using the second configuration information may be completely different from a carrier configured by using the first configuration information, for example, the first configuration information is used to configure the 2.1 GHz carrier and the 2.6 GHz carrier, and the second configuration information is used to configure the 4.9 GHz carrier. Even if both the second configuration information and the first configuration information are used to configure a same carrier, an SRS resource configured for the carrier by using the first configuration information and an SRS resource configured for the carrier by using the second configuration information may also be completely the same, or may have an intersection but not completely the same, or may be completely different. Even if SRS resources configured for a same carrier by using the second configuration information and the first configuration information are the same, an association relationship between an SRS port of the SRS resource configured by using the first configuration information and an antenna port of the UE and an association relationship between an SRS port of the SRS resource configured by using the second configuration information and an antenna port of the UE may be completely the same, or may have an intersection but not completely the same, or may be completely different. In other words, the first configuration information and the second configuration information may be completely the same, or may have an intersection but not completely the same, or may be completely different.

The first condition may include one or more of the following: periodicity time is met; uplink channel quality of the UE is lower than a first threshold; using a time point at which the first configuration information is sent as a start time point, duration from the start time point to a current time point reaches first duration; the UE is handed over to a new cell; a value of a first parameter of the UE changes; a change amount of the value of the first parameter of the UE is greater than the first threshold; or trigger information is received from the UE, where the trigger information indicates to reconfigure an SRS resource, or indicate to reconfigure an association relationship between an SRS port of an SRS resource and an antenna port of the UE. For example, the first condition includes: the uplink channel quality of the UE is lower than the first threshold, and the duration from the time point at which the first configuration information is sent to the current time point reaches the first duration. For another example, the first condition includes: the UE is handed over to a new cell. For another example, the first condition includes: the trigger information is received from the UE. For still another example, the first condition includes: the uplink channel quality of the UE is lower than the first threshold, the periodicity time is met, the duration from the time point at which the first configuration information is sent to the current time point reaches the first duration, the UE is handed over to a new cell, the trigger information is received from the UE, and so on.

That the first condition is that the periodicity time is met means: the network device can periodically send the configuration information to the UE. In this manner, the configuration information can be periodically updated to meet a current channel condition.

The uplink channel quality of the UE may be quality of any uplink channel of the UE, or average quality of all or some of uplink channels of the UE. If the uplink channel quality of the UE is lower than the first threshold, transmission of uplink data scheduled by the network device based on the first configuration information may be affected. Therefore, the network device may perform reconfiguration.

If the first configuration information has been sent to the UE for a relatively long time, an uplink channel condition or the like may change in this period of time, and transmission of the uplink data scheduled by the network device based on the first configuration information may be affected. Therefore, the network device may update the configuration information to be applicable to a current channel condition.

If the UE is handed over to a new cell, the first configuration information sent by an original cell to the UE may no longer be applicable to the new cell. Therefore, the new cell may send the second configuration information to the UE.

The first parameter may include any one or more parameters of the UE, for example, a power consumption parameter, a heating parameter, or the like. For example, if the UE heats seriously, it may indicate that a relationship configured by using the first configuration information is not applicable to an actual situation of the UE. In this case, the network device may update the configuration information after learning that the UE heats seriously.

The UE may alternatively determine whether the configuration information needs to be updated. For example, if the UE determines that an uplink channel condition is relatively poor, or the value of the first parameter of the UE changes, or the change amount of the value of the first parameter of the UE is greater than the first threshold (for example, the UE heats seriously), the UE may send the trigger information to the network device, to trigger the network device to update the configuration information. This enhances initiative of the UE.

In addition to the foregoing conditions, the first condition may further include another condition. This is not limited in this embodiment of this disclosure.

Alternatively, the configuration information may be used to configure an SRS resource for a carrier of the UE, and the configuration information may unnecessarily be used to configure an association relationship between an SRS port of the SRS resource and an antenna port of the UE. The association relationship may be determined according to a predefined rule.

For example, for a carrier, the network device may first determine a specific antenna port originally associated with the carrier and a specific antenna port switched to the carrier by using a switch. Then, the network device may infer, according to a predefined rule, antenna ports that can be connected to a same radio frequency link. Afterwards, the network device may determine, according to the predefined rule, an association relationship between an SRS port of an SRS resource of the carrier and an antenna port. For example, for an SRS resource, an SRS port of the SRS resource may be associated with an antenna port in ascending order of indexes, and same SRS port numbers of different SRS resources may be associated with different antenna port numbers connected to a same radio frequency link.

For a carrier, the network device may determine, in different manners, a specific antenna port originally associated with the carrier and a specific antenna port switched to the carrier by using a switch.

For example, in one manner, if the capability information sent by the UE indicates, in the first manner described above, the antenna ports supported by the P carriers, the UE may place, in the capability information, an index of an antenna port associated with a carrier before an index of an antenna port that can be switched to the carrier by using a switch. In this way, the network device can determine a specific antenna port originally associated with the carrier and a specific antenna port switched to the carrier by using a switch. For example, an antenna port supported by the 2.6 GHz carrier includes the antenna port 0, the antenna port 1, and the antenna port 2. If the capability information sent by the UE indicates, in the first manner described above, the antenna ports supported by the P carriers, the capability information sent by the UE may include {antenna port 1, antenna port 0, antenna port 2}, where the antenna port 1 is associated with the 2.6 GHz carrier, and the antenna port 0 and the antenna port 2 can be switched to the 2.6 GHz carrier by using a switch.

For example, in another manner, if the capability information sent by the UE indicates, in the third manner described above, the antenna ports supported by the P carriers, for one of the P carriers, the network device may infer, according to a predefined rule, a specific antenna port that is in an antenna port supported by the carrier and that is originally associated with the carrier and a specific antenna port switched to the carrier by using a switch. For example, P=3, the three carriers are respectively the 2.1 GHz carrier, the 2.6 GHz carrier, and the 4.9 GHz carrier, and quantities of antenna ports associated with the three carriers are respectively 1, 1, and 2. If numbering is performed according to a predefined rule in ascending order of carrier frequencies, the network device may determine that the antenna port 0 is an antenna port associated with the 2.1 GHz carrier, the antenna port 1 is an antenna port associated with the 2.6 GHz carrier, and the antenna port 2 and the antenna port 3 are antenna ports associated with the 4.9 GHz carrier.

Certainly, the network device may alternatively determine, in another manner, a specific antenna port that is in an antenna port supported by a carrier and that is associated with the carrier and a specific antenna port switched to the carrier by using a switch.

For example, for the 4.9 GHz carrier, the network device may infer, according to a predefined rule, antenna ports that can be switched to a same carrier. For example, the predefined rule specifies that mapping is performed in ascending order of antenna port indexes. In this case, the network device may determine that the antenna port 0 switched by using a switch can be switched to the 4.9 GHz carrier, and the antenna port 1 switched by using a switch can be switched to the 4.9 GHz carrier. Then, the network device may determine, according to the predefined rule, an association relationship between an SRS port of an SRS resource of the 4.9 GHz carrier and an antenna port. For example, the predefined rule specifies that for an SRS resource, an SRS port is associated with an antenna port in ascending order of indexes, and same SRS port numbers of different SRS resources may be associated with different antenna port numbers connected to a same radio frequency link. For example, if the network device configures the SRS resource 20 for the 4.9 GHz carrier, the network device may determine that the SRS port 0 of the SRS resource 20 is associated with the antenna port 0 in FIG. 5, the SRS port 1 of the SRS resource 20 is associated with the antenna port 2 in FIG. 5, and the SRS port 2 of the SRS resource 20 is associated with the antenna port 3 in FIG. 5.

S33: The UE determines, based on the configuration information, an antenna port associated with the first SRS resource.

After the network device sends the configuration information, the UE can send an SRS resource to the network device based on the configuration information, or send an SRS corresponding to the SRS resource. For example, the UE may send, to the network device, all SRSs configured by using the configuration information, or the UE may send, to the network device, some SRSs configured by using the configuration information. The following uses an example in which the UE needs to send, to the network device, an SRS corresponding to the first SRS resource (for example, the SRS corresponding to the first SRS resource is referred to as a first SRS below). The first SRS resource may be an SRS resource configured by using the configuration information.

For example, the UE may determine, based on Table 1 or FIG. 5, an antenna port associated with the first SRS resource, or the UE may determine, according to a predefined rule, the antenna port associated with the first SRS resource. For example, based on Table 1, if the first SRS resource is the SRS resource 10, the UE may determine that the SRS port 0 of the SRS resource 10 is associated with the antenna port 0, the SRS port 1 of the SRS resource 10 is associated with the antenna port 1, and the SRS port 2 of the SRS resource 10 is associated with the antenna port 2.

S34: The UE sends the first SRS to the network device by using the determined antenna port, and correspondingly, the network device receives the first SRS from the UE.

If the UE determines one antenna port, the UE sends the first SRS by using the antenna port; or if the UE determines a plurality of antenna ports, the UE sends a plurality of first SRSs by using the plurality of antenna ports. For example, the first SRS resource is the SRS resource 10, and the UE sends, by using the antenna port 0, the first SRS corresponding to the SRS port 0; sends, by using the antenna port 1, the first SRS corresponding to the SRS port 1; and sends, by using the antenna port 2, the first SRS corresponding to the SRS port 2.

After receiving the first SRS, based on the configuration information, the network device may determine an antenna port that is of the UE and that corresponds to the first SRS resource, and may determine a carrier corresponding to the first SRS resource, so that the network device can perform, by measuring the first SRS, channel estimation on an uplink channel corresponding to each antenna port on the carrier. For example, the first SRS resource is the SRS resource 10, and the UE sends, by using the antenna port 0, the first SRS corresponding to the SRS port 0; sends, by using the antenna port 1, the first SRS corresponding to the SRS port 1; and sends, by using the antenna port 2, the first SRS corresponding to the SRS port 2. In this case, after receiving the first SRS, the network device may perform channel estimation on an uplink channel corresponding to the antenna port 0 on the 2.6 GHz carrier of the UE, perform channel estimation on an uplink channel corresponding to the antenna port 1 on the 2.6 GHz carrier of the UE, and perform channel estimation on an uplink channel corresponding to the antenna port 2 on the 2.6 GHz carrier of the UE.

S35: The network device sends scheduling information to the UE, and correspondingly, the UE receives the scheduling information from the network device. The scheduling information may be used to schedule uplink data transmission on the first carrier, and the first carrier is a carrier configured for the UE. After performing channel estimation on the uplink channel corresponding to the UE, the network device may select, based on a channel estimation result, an uplink channel with relatively good channel quality, to schedule the UE to send uplink data on the uplink channel. In a manner in which the network device schedules uplink data, the network device schedules a physical uplink shared channel (physical uplink shared channel, PUSCH), and the PUSCH carries the uplink data.

For example, if the network device wants to schedule the UE to send uplink data on the first carrier, the network device may select an appropriate antenna port for the UE based on a channel estimation result for an uplink channel corresponding to an antenna port on the first carrier, and indicate the selected antenna port by using the scheduling information.

Alternatively, if the network device wants to schedule uplink data of the UE, the network device may select an appropriate carrier for the UE and select an appropriate antenna port on the carrier based on a channel estimation result for an uplink channel corresponding to an antenna port on each carrier configured for the UE.

For example, the scheduling information may include second information, and the second information may indicate an SRS port that is of an SRS resource and that is associated with the antenna port used to send the uplink data. For example, if the network device wants to schedule the UE to send uplink data on the first carrier, the network device may select an appropriate antenna port for the UE based on a channel estimation result for an uplink channel corresponding to an antenna port on the first carrier, and indicate, by using the scheduling information, an SRS port that is of an SRS resource and that is associated with the selected antenna port.

S36: The UE sends uplink data to the network device on the first carrier, and correspondingly, the network device receives the uplink data from the UE. The UE may send the uplink data to the network device on the first carrier based on the antenna port indicated by the scheduling information.

S32 to S36 all are optional steps, and therefore are represented by dashed lines in FIG. 3.

To better understand effects brought by embodiments of this disclosure, the following describes a simulation result for embodiments of this disclosure.

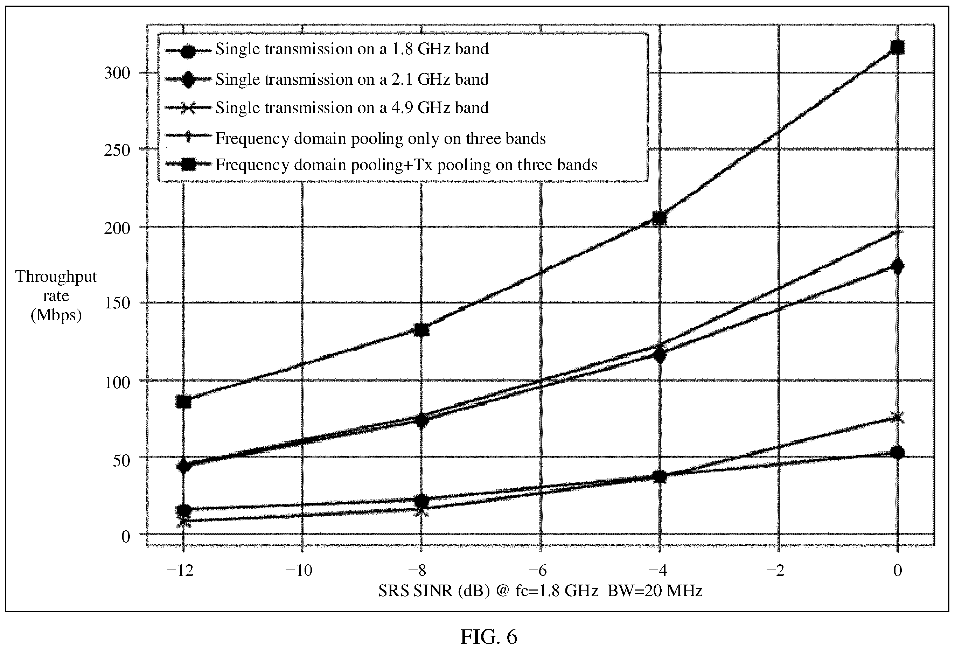

For example, FIG. 6 may be obtained based on simulation parameters in Table 2. FIG. 6 compares uplink capacity performance in different mechanisms, and the mechanisms include: 1. 1 Tx transmit on a 1.8 GHz carrier; 2. 1 Tx transmit on a 2.1 GHz carrier; 3. 2 Tx transmit on a 4.9 GHz carrier; 4. frequency domain pooling (CA) only and concurrency of 1 Tx+1 Tx+2 Tx on three carriers; and 5. a transmission channel resource pooling solution provided in embodiments of this disclosure. " 1 Tx" refers to transmission by using one uplink transmission channel, and " 2 Tx" refers to transmission by using two uplink transmission channels.

**Table 2**

| **Simulation parameter** | | | |
|---|---|---|---|
| Carrier frequency (GHz) | 1.8 | 2.1 | 4.9 |
| Bandwidth (MHz) | 20 | 55 | 100 |
| Subcarrier spacing (kHz) | 30 | 30 | 30 |
| Quantity of base station antennas | 4 | 32 | 64 |
| Quantity of UE antennas | 1 | 1 | 2 |
| Antenna gain per receive (RX) (dBi) | 16.9 | 10.5 | 9.5 |
| Antenna gain per transmit (TX) (dBi) | 0 | 0 | 0 |
| Penetration loss (dB) | 21.74 | 22.76 | 29.51 |
| Interference margin (dB) | 3 | 2 | 2 |
| Maximum transmit power of UE (dBm) | 23 | | |
| Channel model | Clustered delay line (Clustered Delay Line, CDL)-A | | |

Table 3 may be obtained based on FIG. 6, and shows a gain of a corresponding mechanism.

**Table 3**

| | | | |
|---|---|---|---|
| Signal to interference plus noise ratio (Signal to Interference plus Noise Ratio, SINR) (dB) | -8 | -4 | 0 |
| Gain of resource pooling compared with frequency domain pooling only | 74.95% | 68.51% | 61.25% |
| Gain of frequency domain pooling only compared with single carrier transmission | 3.86% | 4.61% | 12.46% |

It can be learned from Table 3 that, the fourth solution, that is, the solution of frequency domain pooling only, has a limited performance gain compared with the first three single carrier transmission solutions, and has only a performance gain of 12%. This is mainly because a number of transmission channels of a single carrier is limited in the solution of frequency domain pooling only. However, according to the solution provided in the embodiment of this disclosure, an uplink capacity can be further improved through pooling of a frequency domain resource and a transmission channel resource, and a throughput rate can reach 1.6 times that of CA.

In conclusion, in embodiments of this disclosure, a new transmission channel architecture is designed for the UE. A crystal oscillator and a switch are added, so that an antenna port can be switched between a plurality of carriers. In addition, in embodiments of this disclosure, based on the new transmission channel architecture, a new UE capability is designed, an association relationship between an SRS port of an SRS resource configured for each carrier of the UE and an antenna port of the UE is established, and the network device is allowed to obtain uplink channel information by measuring an SRS, so that the network device can select a better antenna port switching solution for the UE. Resource pooling is performed on a transmission channel resource of the UE, and each transmission channel of the UE is allowed to switch to different carriers based on an instantaneous channel condition, so that a maximum number of transmission channels supported by each carrier is flexibly adjusted, and uplink transmission performance is improved.

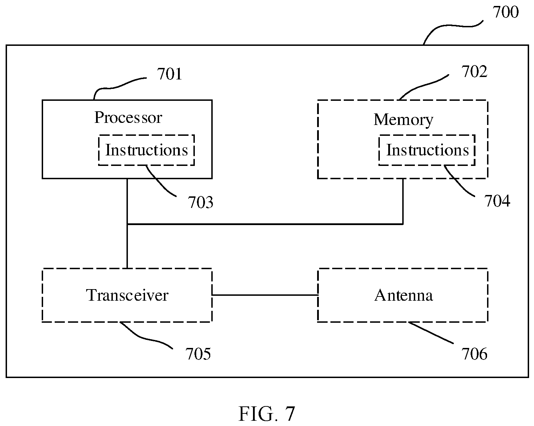

FIG. 7 is a schematic diagram of a structure of a communication apparatus 700 according to an embodiment of this disclosure. The communication apparatus 700 may be the terminal device in the embodiment shown in FIG. 3, and is configured to implement the method performed by the terminal device in the foregoing method embodiment. Alternatively, the communication apparatus 700 may be the network device in the embodiment shown in FIG. 3, and is configured to implement the method corresponding to the network device in the foregoing method embodiment. For a specific function, refer to the description in the foregoing method embodiment.

The communication apparatus 700 includes one or more processors 701. The processor 701 may also be referred to as a processing unit, and may implement a specific control function. The processor 701 may be a general-purpose processor, a dedicated processor, or the like. For example, the processor 701 includes a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to control the communication apparatus 700, and execute a software program and/or process data. Different processors may be independent components, or may be integrated into one or more processors, for example, integrated into one or more application-specific integrated circuits.

Optionally, the communication apparatus 700 includes one or more memories 702 configured to store instructions 704. The instruction may be run on the processor, so that the communication apparatus 700 performs the method described in the foregoing method embodiment. Optionally, the memory 702 may further store data. The processor and the memory may be separately disposed, or may be integrated together.

Optionally, the communication apparatus 700 may include instructions 703 (which may also be referred to as code or programs sometimes), and the instructions 703 may be run on the processor, so that the communication apparatus 700 performs the method described in the foregoing embodiment. The processor 701 may store data.

Optionally, the communication apparatus 700 may further include a transceiver 705 and an antenna 706. The transceiver 705 may be referred to as a transceiver unit, a transceiver circuit, an input/output interface, or the like, and is configured to implement a receiving/sending function of the communication apparatus 700 by using the antenna 706. Optionally, the communication apparatus 700 and the UE shown in FIG. 1 may be a same apparatus, or may be different apparatuses. If the communication apparatus 700 and the UE shown in FIG. 1 are a same apparatus, the transceiver 705 includes, for example, at least one radio frequency link shown in FIG. 1, and the antenna 706 is, for example, implemented as at least one antenna port shown in FIG. 1.

Optionally, the communication apparatus 700 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display screen, or the like. It can be understood that in some embodiments, the communication apparatus 700 may include more or fewer components, or some components are integrated, or some components are split. These components may be implemented by hardware, software, or a combination of software and hardware.

The processor 701 and the transceiver 705 described in this embodiment of this disclosure may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a relatively large device (for example, a module that can be embedded in another device). For details, refer to the foregoing descriptions of the terminal device and the network device. Details are not described herein again.

An embodiment of this disclosure provides a terminal device. The terminal device (referred to as UE for ease of description) may be used in the foregoing embodiments. The terminal device includes a corresponding means (means), unit, and/or circuit configured to implement the functions of the UE in the embodiment shown in FIG. 3. For example, the terminal device includes a transceiver module configured to support the terminal device in implementing a receiving/sending function, and a processing module configured to support the terminal device in processing a signal.

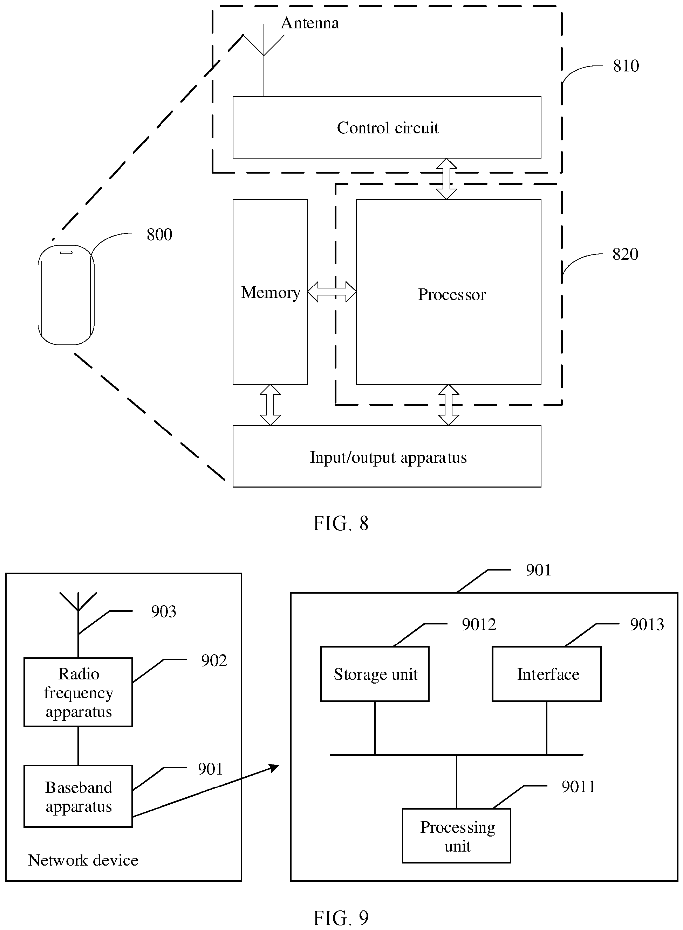

FIG. 8 is a schematic diagram of a structure of a terminal device 800 according to an embodiment of this disclosure.

The terminal device 800 is applicable to the architecture shown in FIG. 2. For ease of description, FIG. 8 shows only main components of the terminal device 800. As shown in FIG. 8, the terminal device 800 includes a processor, a memory, a control circuit, an antenna, and an input/output apparatus. The processor is mainly configured to process a communication protocol and communication data, control the entire terminal device 800, execute a software program, and process data of the software program. The memory is mainly configured to store a software program and data. The control circuit is mainly configured to implement conversion between a baseband signal and a radio frequency signal and process the radio frequency signal. The antenna is mainly configured to receive and send a radio frequency signal in a form of an electromagnetic wave. The input/output apparatus, for example, a touchscreen, a display screen, a microphone, or a keyboard, is mainly configured to receive data input by a user and output data to a user

For example, the terminal device 800 is a mobile phone. After the terminal device 800 is powered on, the processor may read the software program in the memory, explain and execute instructions of the software program, and process data of the software program. When data needs to be sent in a wireless manner, the processor performs baseband processing on the to-be-sent data and then outputs a baseband signal to the control circuit. The control circuit performs radio frequency processing on the baseband signal and then sends a radio frequency signal in a form of an electromagnetic wave by using the antenna. When data is sent to the terminal device 800, the control circuit receives a radio frequency signal by using the antenna, converts the radio frequency signal into a baseband signal, and outputs the baseband signal to the processor. The processor converts the baseband signal into data, and processes the data.

A person skilled in the art may understand that for ease of description, FIG. 8 shows only one memory and one processor. In some embodiments, the terminal device 800 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process a communication protocol and communication data. The central processing unit is mainly configured to control the entire terminal device 800, execute a software program, and process data of the software program. The processor in FIG. 8 integrates functions of the baseband processor and the central processing unit. A person skilled in the art may understand that the baseband processor and the central processing unit may alternatively be processors independent of each other, and are interconnected by using a technology like a bus. The terminal device 800 may include a plurality of baseband processors to adapt to different network standards, and the terminal device 800 may include a plurality of central processing units to enhance a processing capability of the terminal device. The components of the terminal device 800 may be connected by using various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the memory in a form of a software program, and the processor executes the software program to implement a baseband processing function.

In an example, the antenna and the control circuit that have a receiving/sending function may be considered as a transceiver unit 810 of the terminal device 800, and the processor having a processing function may be considered as a processing unit 820 of the terminal device 800. As shown in FIG. 8, the terminal device 800 includes the transceiver unit 810 and the processing unit 820. The transceiver unit may also be referred to as a transceiver, a transceiver apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. In other words, the transceiver unit 810 includes the receiving unit and the sending unit. For example, the receiving unit may also be referred to as a receiver, a receiving circuit, or the like, and the sending unit may be referred to as a transmitter, a transmitter, a transmitting circuit, or the like. Optionally, the terminal device 800 and the UE shown in FIG. 1 may be a same apparatus, or may be different apparatuses. If the terminal device 800 and the UE shown in FIG. 1 are a same apparatus, the transceiver unit 810 includes, for example, at least one radio frequency link and at least one antenna port shown in FIG. 1.

An embodiment of this disclosure further provides a network device. The network device may be used in the foregoing embodiments. The network device includes a means (means), a unit, and/or a circuit configured to implement the functions of the network device in the embodiment shown in FIG. 3. For example, the network device includes a transceiver module configured to support the network device in implementing a receiving/sending function, and a processing module, configured to support the network device in processing a signal.

FIG. 9 is a schematic diagram of a structure of a network device according to an embodiment of this disclosure. As shown in FIG. 9, the network device is applicable to the architecture shown in FIG. 2, for example, the network device is the access network device in the architecture. The network device includes a baseband apparatus 901, a radio frequency apparatus 902, and an antenna 903. In an uplink direction, the radio frequency apparatus 902 receives, by using the antenna 903, information sent by a terminal device, and sends, to the baseband apparatus 901, the information sent by the terminal device for processing. In a downlink direction, the baseband apparatus 901 processes information from the terminal device, and sends processed information to the radio frequency apparatus 902. The radio frequency apparatus 902 processes the information from the terminal device, and then sends processed information to the terminal device by using the antenna 903.

The baseband apparatus 901 includes one or more processing units 9011, a storage unit 9012, and an interface 9013. The processing unit 9011 is configured to support the network device in performing the functions of the network device in the foregoing method embodiment. The storage unit 9012 is configured to store a software program and/or data. The interface 9013 is configured to exchange information with the radio frequency apparatus 902. The interface includes an interface circuit, configured to input and output information. In an implementation, the processing unit is an integrated circuit, for example, one or more ASICs, one or more DSPs, one or more FPGAs, or a combination of the integrated circuits. The integrated circuits may be integrated together to form a chip. The storage unit 9012 and the processing unit 9011 may be located on a same chip, that is, on-chip storage elements. Alternatively, the storage unit 9012 and the processing unit 9011 may be located on different chips, that is, off-chip storage elements. The storage unit 9012 may be one memory, or may be a general term for a plurality of memories or storage elements.

The network device may implement some or all of the steps in the foregoing method embodiment by scheduling a program by using one or more processing units, for example, a corresponding function of the network device in the embodiment shown in FIG. 3 is implemented. The one or more processing units may support radio access technologies of a same standard, or may support radio access technologies of different standards.

A person of ordinary skill in the art may be aware that, the units and steps in the examples described with reference to embodiments disclosed in this specification can be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this disclosure.

In the several embodiments provided in this disclosure, it should be understood that the disclosed system, apparatus, and method may be implemented in other manners. For example, the apparatus embodiments described above are merely examples. For example, division into units is merely division into logical functions. The units described as separate parts may or may not be physically separate, and parts displayed as units may or may not be physical units, that is, may be located in one place, or may be distributed on a plurality of network units. Some or all of the units may be selected based on an actual requirement to achieve the objectives of the solutions in embodiments.

When the function is implemented in a form of a software functional unit and sold or used as an independent product, the function may be stored in a computer-readable storage medium. Based on such an understanding, the technical solutions in this disclosure essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this disclosure. The foregoing computer-readable storage medium may be any available medium that can be accessed by a computer. As an example rather than a limitation, the computer-readable medium may include a random access memory (random access memory, RAM), a read-only memory (read-only memory, ROM), a programmable read-only memory (programmable ROM, PROM), an erasable programmable read-only memory (erasable PROM, EPROM), an electrically erasable programmable read only memory (electrically erasable programmable read only memory, EEPROM), a compact disc read-only memory (compact disc read-only memory, CD-ROM), a universal serial bus flash disk (universal serial bus flash disk), a removable hard disk or another optical disk storage, a magnetic disk storage medium or another magnetic storage device, or any other medium that can be used to carry or store expected program code in a form of instructions or a data structure and that can be accessed by a computer. In addition, as an example description rather than a limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this disclosure, but are not intended to limit the protection scope of embodiments of this disclosure. Any variation or replacement readily figured out by a person skilled in the art within the technical scope disclosed in embodiments of this disclosure shall fall within the protection scope of embodiments of this disclosure. Therefore, the protection scope of embodiments of this disclosure shall be subject to the protection scope of the claims.

## Claims

1. A communication method, comprising:
determining capability information of a terminal device, wherein the capability information indicates antenna ports supported by P frequency domain units of the terminal device, an antenna port supported by an i^{th} frequency domain unit in the P frequency domain units comprises an antenna port associated with the i^{th} frequency domain unit and an antenna port that is in antenna ports associated with *Nᵢ* frequency domain units in the P frequency domain units and that can be switched to the i^{th} frequency domain unit, the *Nᵢ* frequency domain units do not comprise the i^{th} frequency domain unit, and at least two of the P frequency domain units are associated with respective uplink transmission configuration information, wherein P is an integer greater than 1, and *Nᵢ* is an integer greater than or equal to 1 and less than P; and
sending a first message to a network device, wherein the first message comprises the capability information.

2. The method according to claim 1, wherein that the capability information indicates antenna ports supported by P frequency domain units of the terminal device comprises:
the capability information indicates an index *xᵢ* of the antenna port supported by the i^{th} frequency domain unit in the P frequency domain units, wherein *xᵢ* is an integer greater than or equal to 1 and less than or equal to *Nₜ*, or *xᵢ* is a nonnegative integer less than *Nₜ*, and *Nₜ* is a total number of different antenna ports associated with the P frequency domain units; or
the capability information indicates a total number *Nₜ* of antenna ports of the terminal device, and the P frequency domain units are associated with the *Nₜ* antenna ports.

3. The method according to claim 1, wherein that the capability information indicates antenna ports supported by P frequency domain units of the terminal device comprises:
the capability information indicates a number *Mᵢ* of antenna ports associated with the i^{th} frequency domain unit in the P frequency domain units, and the first message further comprises first information, wherein the first information indicates information about an antenna port that is in the *Mᵢ* antenna ports and that can be switched to a j^{th} frequency domain unit, i is unequal to j, and i and j are integers greater than or equal to 1 and less than or equal to P.

4. The method according to claim 3, wherein that the first information indicates information about an antenna port that is in the *Mᵢ* antenna ports and that can be switched to a j^{th} frequency domain unit comprises:
the first information indicates a number of antenna ports that are in the *Mᵢ* antenna ports and that can be switched to the j^{th} frequency domain unit; or
the first information indicates that an m^{th} antenna port in the *Mᵢ* antenna ports can be switched to the j^{th} frequency domain unit, wherein m=1, 2, ..., and *Mᵢ*, or m=0, 1, ..., and *Mᵢ*-1.

5. The method according to any one of claims 1 to 4, wherein the method further comprises:
receiving configuration information from the network device, wherein the configuration information is used to configure one or more SRS resources for a first frequency domain unit of the terminal device.

6. The method according to claim 5, wherein
the configuration information is further used to configure an association relationship between an SRS port of the one or more SRS resources and an antenna port supported by the first frequency domain unit, the association relationship between the SRS port of the one or more SRS resources and the antenna port supported by the first frequency domain unit indicates an antenna port used by the terminal device to send an SRS corresponding to the SRS port, and a number of SRS ports of an SRS resource of the first frequency domain unit is a positive integer less than or equal to a number of antenna ports supported by the first frequency domain unit.

7. The method according to claim 5 or 6, wherein
the configuration information is further used to configure a second SRS resource for a second frequency domain unit of the terminal device, and if the second SRS resource and a first SRS resource occupy a same time unit, the second SRS resource and the first SRS resource are not associated with a same antenna port, wherein the first SRS resource is one of the one or more SRS resources.

8. A communication method, comprising:
receiving a first message from a terminal device, wherein the first message comprises capability information, the capability information indicates antenna ports supported by P frequency domain units of the terminal device, an antenna port supported by an i^{th} frequency domain unit in the P frequency domain units comprises an antenna port associated with the i^{th} frequency domain unit and an antenna port that is in antenna ports associated with *Nᵢ* frequency domain units in the P frequency domain units and that can be switched to the i^{th} frequency domain unit, the *Nᵢ* frequency domain units do not comprise the i^{th} frequency domain unit, and at least two of the P frequency domain units are associated with respective uplink transmission configuration information, wherein P is an integer greater than 1, and *Nᵢ* is an integer greater than or equal to 1 and less than P.

9. The method according to claim 8, wherein that the capability information indicates antenna ports supported by P frequency domain units of the terminal device comprises:
the capability information indicates an index *xᵢ* of the antenna port supported by the i^{th} frequency domain unit in the P frequency domain units, wherein *xᵢ* is an integer greater than or equal to 1 and less than or equal to *Nₜ*, or *xᵢ* is a nonnegative integer less than *Nₜ*, and *Nₜ* is a total number of different antenna ports associated with the P frequency domain units; or
the capability information indicates a total number *Nₜ* of antenna ports of the terminal device, and all of the P frequency domain units are associated with the *Nₜ* antenna ports.

10. The method according to claim 8, wherein that the capability information indicates antenna ports supported by P frequency domain units of the terminal device comprises:
the capability information indicates a number *Mᵢ* of antenna ports associated with the i^{th} frequency domain unit in the P frequency domain units, and the first message further comprises first information, wherein the first information indicates information about an antenna port that is in the *Mᵢ* antenna ports and that can be switched to a j^{th} frequency domain unit, i is unequal to j, and i and j are integers greater than or equal to 1 and less than or equal to P.

11. The method according to claim 10, wherein that the first information indicates information about an antenna port that is in the *Mᵢ* antenna ports and that can be switched to a j^{th} frequency domain unit comprises:
the first information indicates a number of antenna ports that are in the *Mᵢ* antenna ports and that can be switched to the j^{th} frequency domain unit; or
the first information indicates that an m^{th} antenna port in the *Mᵢ* antenna ports can be switched to the j^{th} frequency domain unit, wherein m=1, 2, ..., and *Mᵢ*, or m=0, 1, ..., and *Mᵢ*-1.

12. The method according to any one of claims 8 to 11, wherein the method further comprises:
sending configuration information to the terminal device, wherein the configuration information is used to configure one or more SRS resources for a first frequency domain unit of the terminal device.

13. The method according to claim 12, wherein
the configuration information is further used to configure an association relationship between an SRS port of the one or more SRS resources and an antenna port supported by the first frequency domain unit, the association relationship between the SRS port of the one or more SRS resources and the antenna port supported by the first frequency domain unit is used to indicate an antenna port used by the terminal device to send an SRS corresponding to the SRS port, and a number of SRS ports of an SRS resource of the first frequency domain unit is a positive integer less than or equal to a number of antenna ports supported by the first frequency domain unit.

14. The method according to claim 12 or 13, wherein
the configuration information is further used to configure a second SRS resource for a second frequency domain unit of the terminal device, and if the second SRS resource and a first SRS resource occupy a same time unit, the second SRS resource and the first SRS resource are not associated with a same antenna port, wherein the first SRS resource is one of the one or more SRS resources.

15. The method according to any one of claims 8 to 14, wherein the method further comprises:
when a first condition is met, sending new configuration information to the terminal device, wherein the new configuration information is used to configure at least one SRS resource for the first frequency domain unit, and is used to configure an association relationship between an SRS port of the at least one SRS resource and the antenna port supported by the first frequency domain unit.

16. The method according to claim 15, wherein the first condition comprises one or more of the following:
uplink channel quality of the terminal device is lower than a first threshold;
using a time point at which the configuration information is sent as a start time point, duration from the start time point to a current time point reaches first duration;
the terminal device is handed over to a new cell;
a value of a first parameter of the terminal device changes; or
trigger information is received from the terminal device, wherein the trigger information indicates to reconfigure an SRS resource.

17. A communication apparatus, comprising at least one antenna port and at least one radio frequency link, wherein a first radio frequency link in the at least one radio frequency link comprises M crystal oscillators, a first amplifier, a first switch configured to connect the first amplifier to the M crystal oscillators, and M filters connected to the first amplifier, the first switch can be switched between the M crystal oscillators, the M filters are further connected to a first antenna port, the first antenna port is one of the at least one antenna port, the M crystal oscillators are associated with M frequency domain units, and M is an integer greater than or equal to 2.

18. The communication apparatus according to claim 17, wherein the at least one radio frequency link further comprises a second radio frequency link, the second radio frequency link comprises N crystal oscillators, a second amplifier, a second switch configured to connect the second amplifier to the N crystal oscillators, and N filters connected to the second amplifier, the second switch can be switched between the N crystal oscillators, the N filters are further connected to a second antenna port, the second antenna port is one of the at least one antenna port, the N crystal oscillators are associated with N frequency domain units, and N is an integer greater than or equal to 2.

19. A communication apparatus, comprising a transceiver unit and a processing unit, wherein the transceiver unit and the processing unit are coupled to perform the method according to any one of claims 1 to 7 or the method according to any one of claims 8 to 16.

20. A computer-readable storage medium, wherein the computer-readable storage medium is configured to store a computer program, and when the computer program is run on a computer, the computer is enabled to perform the method according to any one of claims 1 to 7, or the computer is enabled to perform the method according to any one of claims 8 to 16.
